(19) Europäisches Patentamt
European Patent Office
Office européen des brevets

(11) **EP 1 626 878 B1**

(12) **FASCICULE DE BREVET EUROPEEN**

(45) Date de publication et mention
de la délivrance du brevet:
**11.03.2009 Bulletin 2009/11**

(21) Numéro de dépôt: **04742776.0**

(22) Date de dépôt: **19.05.2004**

(51) Int Cl.:
*B60K 6/365* (2007.10)     *B60K 6/445* (2007.10)
*B60W 10/06* (2006.01)     *B60W 10/08* (2006.01)
*B60W 10/10* (2006.01)     *B60W 20/00* (2006.01)
*B60W 30/18* (2006.01)     *F16H 61/66* (2006.01)

(86) Numéro de dépôt international:
**PCT/FR2004/001232**

(87) Numéro de publication internationale:
**WO 2004/106097 (09.12.2004 Gazette 2004/50)**

(54) **PROCEDE ET DISPOSITIF DE COMMANDE D'UN GROUPE MOTOPROPULSEUR AVEC UNE TRANSMISSION INFINIMENT VARIABLE**

VERFAHREN UND VORRICHTUNG ZUR STEUERUNG EINES TRIEBSTRANGS MIT EINEM STUFENLOSEN GETRIEBE

METHOD AND DEVICE FOR CONTROLLING A POWERTRAIN COMPRISING A CONTINUOUSLY VARIABLE TRANSMISSION

(84) Etats contractants désignés:
**AT BE BG CH CY CZ DE DK EE ES FI FR GB GR HU IE IT LI LU MC NL PL PT RO SE SI SK TR**

(30) Priorité: **23.05.2003 FR 0306213**
**23.05.2003 FR 0306214**
**23.05.2003 FR 0306215**
**23.05.2003 FR 0306216**

(43) Date de publication de la demande:
**22.02.2006 Bulletin 2006/08**

(73) Titulaire: **RENAULT S.A.S.**
**92100 Boulogne Billancourt (FR)**

(72) Inventeurs:
• **ROYER, Laurent**
**F-75012 Paris (FR)**
• **GOELZER, Anne**
**F-31000 Toulouse (FR)**
• **DE LARMINAT, Philippe**
**F-44000 Nantes (FR)**
• **PICHON, Yves**
**F-92190Meudon (FR)**

(74) Mandataire: **Rougemont, Bernard**
**Renault Technocentre**
**Département Propriété Intellectuelle**
**Sce 00267 TCR GRA 2 36**
**1 Avenue du Golf**
**78288 Guyancourt Cedex (FR)**

(56) Documents cités:
EP-A- 0 937 600          EP-A- 1 255 175
FR-A- 2 834 249          US-A1- 2001 017 227
US-A1- 2002 023 789      US-A1- 2003 057 002
US-B1- 6 341 584

• WAELTERMANN P ET AL: "DER ENTWURF EINES HYBRIDFAHRZEUGS IM SINNE EINES MECHATRONISCHEN SYSTEMS" AUTOMATISIERUNGSTECHNIK - AT, OLDENBOURG VERLAG. MUNCHEN, DE, vol. 44, no. 7, juin 1996 (1996-06), pages 338-344, XP000997029 ISSN: 0178-2312

EP 1 626 878 B1

**Description**

La présente invention concerne un procédé et un dispositif de commande d'un groupe motopropulseur avec une transmission infiniment variable. Le système concerné est un véhicule équipé d'un moteur thermique et d'une transmission infiniment variable fonctionnant en mode « tirage », en mode "rétro", en mode "rampage en couple" et en mode "rampage en vitesse". Le préambule de la revendication 1 est défini par EP 1 255 175 A.

Le groupe motopropulseur concerné ne comporte pas d'embrayage ni de convertisseur entre le moteur thermique et la transmission.

En mode « tirage », le moteur thermique fournit un couple propulseur aux roues du véhicule.

En mode « rétro », le conducteur ne fournit aucune intention sur la commande du moteur thermique.

En mode « rampage en couple », le véhicule se déplace à faible vitesse et le conducteur fournit une intention sur la commande du moteur thermique pour agir sur le système de freinage.

En mode « rampage en vitesse », le conducteur ne fournit aucune intention sur la commande du moteur thermique ni sur le système de freinage. Il n'appuie pas sur la pédale de frein.

La transmission infiniment variable utilisée dans le système de l'invention est constituée :

- de deux machines électriques électriquement reliées par un élément tampon d'énergie et fonctionnant en variateur électriques ;
- d'une chaîne cinématique disposant de quatre arbres d'entrée/sortie respectivement connectés au moteur thermique, aux roues et aux machines électriques.

Des actionneurs permettent de contrôler l'état de fonctionnement essentiellement du moteur thermique et des deux machines électriques. Ces actionneurs doivent recevoir des signaux de pilotage produits par un superviseur, par exemple implémenté sur un ordinateur de bord.

Dans la publication FR 2834249, qui n'est pas considérée comme une antériorité, on décrit une architecture à trois couches pour un superviseur de groupe motopropulseur qui permet de rendre le superviseur peu dépendant du type de moteur thermique, des caractéristiques de la transmission infiniment variable et des caractéristiques, tant du comportement routier du véhicule que du style de conduite du conducteur.

Dans une première couche, le superviseur comporte un premier moyen pour interpréter la volonté du conducteur tout en tenant compte de l'environnement de conduite du véhicule.

Dans une seconde couche, le superviseur comporte un second moyen qui coopère avec le premier moyen pour déterminer, indépendamment du type de moteur thermique, le point optimal de fonctionnement du groupe motopropulseur pour appliquer une consigne déterminée en fonction de l'interprétation de la volonté du conducteur.

Dans une troisième couche, le superviseur comporte un troisième moyen qui coopère avec le second moyen pour déterminer les signaux de commande des actionneurs d'un Groupe Motopropulseur avec une transmission infiniment variable du type décrit plus haut.

C'est un objet de la présente invention de permettre, au niveau de la troisième couche du superviseur, de calculer la commande des trois actionneurs disponibles - moteur thermique et machines électriques - permettant de réaliser le point de fonctionnement requis par les couches supérieures de supervision, particulièrement dans le mode de tirage, et en utilisant une méthode de suivi de couple (Torque Tracking), dans le mode rétro, dans le mode rampage en couple, dans le mode rampage en vitesse.

Le procédé de commande de l'invention concerne un groupe motopropulseur dont le moteur thermique du groupe est couplé directement aux roues du véhicule à travers une transmission infiniment variable incluant deux machines électriques électriquement reliées par un élément tampon d'énergie électrique. Le procédé de commande est tel que le véhicule peut être entraîné par le groupe motopropulseur, freiné par celui-ci, découplé de celui-ci, ou maintenu à l'arrêt.

En mode tirage, on contrôle le couple à la roue et le régime du moteur thermique en exploitant uniquement une mesure du niveau de charge de l'élément tampon d'énergie électrique et des mesures de régime et de couple fournies par les machines électriques.

En mode rétro, on contrôle le régime du moteur thermique, le moteur thermique étant en coupure d'injection, en exploitant uniquement une mesure du niveau de charge du variateur et des mesures de régime des machines électriques et de couple fourni par celles-ci.

En mode rampage en couple, on contrôle le couple à la roue en maintenant le moteur thermique au ralenti en exploitant uniquement une mesure du niveau de charge du variateur et des mesures de régime des machines électriques et de couple fourni par celles-ci

En mode rampage en vitesse, on contrôle la vitesse du véhicule en maintenant le moteur thermique au ralenti en exploitant uniquement une mesure du niveau de charge du variateur et des mesures de régime des machines électriques et de couple fourni par celles- ci.

La solution proposée par l'invention permet de réaliser une commande du groupe motopropulseur GMP pour atteindre simultanément l'ensemble des objectifs requis, à savoir produire une valeur déterminée de couple aux roues, de régime du moteur thermique et de niveau d'énergie de l'élément tampon d'énergie

Elle a pour particularité de s'appliquer à un groupe motopropulseur GMP dépourvu de coupleurs entre le moteur thermique et la transmission, comme un embrayage ou un convertisseur.

En effet, l'invention concerne un procédé de commande d'un groupe motopropulseur de véhicule comportant un moteur thermique couplé directement aux roues du véhicule et une transmission infiniment variable à variateur électrique incluant deux machines électriques, selon lequel le véhicule peut être, selon une pluralité de modes d'entraînement spécifiques du véhicule, entraîné par le groupe motopropulseur, freiné par celui-ci, découplé de celui-ci ou maintenu à l'arrêt,le procédé de commande étant du genre dans lequel il est exécuté :

- une interprétation de la volonté du conducteur ; puis
- une détermination d'un point optimal de fonctionnement du groupe motopropulseur ; puis
- une détermination de signaux de commande des actionneurs dudit groupe motopropulseur.

Le procédé de l'invention est caractérisé en ce que l'étape de détermination de signaux de commande des actionneurs dudit groupe motopropulseur consiste, à déterminer un mode d'entraînement spécifique sélectionné dans ladite pluralité de modes d'entraînement spécifiques du véhicule par le groupe motopropulseur, à contrôler le couple à la roue et le régime du moteur thermique en exploitant uniquement une mesure du niveau de charge de l'élément tampon d'énergie électrique et des mesures de régime et de couple fournies par les machines.

L'invention concerne aussi un dispositif de commande d'un groupe motopropulseur à transmission infiniment variable pour mettre en oeuvre le procédé selon l'invention, et du genre basé sur une architecture de supervision à trois couches comportant :

- un premier contrôleur pour interpréter la volonté du conducteur ;
- un second contrôleur pour déterminer un point optimal de fonctionnement du groupe motopropulseur ; et
- un troisième contrôleur pour déterminer les signaux de commande des actionneurs du groupe motopropulseur.

Le dispositif de l'invention est caractérisé en ce que le troisième contrôleur comporte :

- une unité de régulation pour réguler le couple à la roue et le régime moteur thermique ;
- une unité de découplage pour en déduire les couples de consignes du moteur thermique est des machines électriques ; et
- une unité de détermination pour déterminer le niveau de charge de l'élément de stockage d'énergie électrique de la transmission infiniment variable, de couple à la roue er de régime moteur thermique ;

et en ce que l'unité de couplage comporte :

- un rassembleur vectoriel rassemblant des variables intermédiaire issues de la régulation du niveau de charge et du couple aux roues déterminés exécutée par l'unité de régulation;
- un module de découplage non linéaire recevant la sortie du rassembleur et l'ensemble des variables déterminées exécutées par l'unité de détermination ;
- un module appliquant aux deux premières sorties du module un gain égal à la période d'échantillonnage du système ;
- un opérateur d'addition ajoutant au signal de sortie du module le premier signal de sortie de ladite unité ;
- un circuit appliquant à la sortie de l'opérateur une saturation en fonction du couple électromagnétique maximal qui dépend des régimes déterminés à chaque machine électrique,
- un circuit appliquant un retard au signal de sortie du circuit de saturation de façon à produire des signaux de commande de couple des deux machines électriques.

D'autres caractéristiques et avantages de la présente invention seront mieux compris à l'aide de la description et des figures annexées dans lesquelles :

- la figure 1 est une vue schématique représentant les éléments principaux d'un véhicule dans lequel sont implémentés le procédé et le dispositif de l'invention ;
- les figures 2 et 3 sont des organigrammes pour exposer les divers aspects du procédé de l'invention ;
- la figure 4 est une vue schématique représentant les parties principales du dispositif de l'invention ; en mode tirage
- la figure 5 est une vue schématique représentant un mode particulier de réalisation du troisième bloc de la figure 4.
- les figures 6 et 7 illustrent le mode rétro- tes figures 8 et 9 illustrent le mode rampage en couple

- les figures 10 et 11 illustrent le mode rampage en vitesse

Dans la suite du texte, les notations suivantes ont la signification suivante :

- Le terme â ou ^a désigne une estimation de la variable a ;
- Le terme a* ou le terme a* désigne une consigne optimisée de! a variable a ;
- Le terme a# ou le terme a# désigne une consigne calculée de la variable a ;
- Le terme *a* ou le terme a' désigne la variation temporelle de la variable a ;

  - un arbre 16 pour échanger de la puissance mécanique avec les roues 6 du véhicule ;
  - des arbres 17 et 18 pour échanger de la puissance mécanique avec les rotors des deux machines électriques 11 et 12.

Le moteur thermique 4 est contrôlé en couple par un contrôleur 3 et les machines électriques 11 et 12 sont respectivement contrôlées par un contrôleur 19 et par un contrôleur 20. La chaîne cinématique 13 de la transmission IVT 5 comporte ainsi qu'il est connu des coupleurs comme des embrayages et des freins qui sont commandés par un contrôleur de mode de transmission qui n'est ni décrit ni représenté dans la présente demande mais qui est défini dans les précédentes demandes de brevet précitées du demandeur.

Le premier mode de fonctionnement du groupe motopropulseur GMP concerné par la présente invention est lemode tirage appelé Torque Tracking (TT), au cours duquel le moteur thermique fournit un couple positif à la transmission (tirage). Au cours de ce mode, les objectifs mécaniques poursuivis par le procédé de l'invention sont la régulation du régime du moteur thermique et du couple fourni aux roues. L'objectif énergétique poursuivi par le procédé de l'invention est la régulation de la tension du condensateur.

Dans la suite de la description, on exploitera les grandeurs désignées par les notations :

$.w_{e1}$ : régime de la première machine électrique 11,
$.w_{e2}$ : régime de la seconde machine électrique 12,
$.Td_{e1}$ : couple de perturbation appliqué sur le couple fourni par la première machine électrique $M_{e1}$ 11,
$.Td_{e2}$ : couple de perturbation appliqué sur le couple fourni par la seconde machine électrique $M_{e2}$ 12,
$.T_{e1}\#$ : consigne de couple pour la première machine électrique $M_{e1}$ 11,
$. T_{e2}\#$ : consigne de couple pour la première machine électrique $M_{e2}$ 12,
$. w_{ice}$ : régime du moteur thermique $_{ice}$ 4,
$. T_{ice}$ : couple du moteur thermique $_{ice}$ appliqué sur le vilebrequin 8,
$. Td_{ice}$ : couple de perturbation appliqué sur le couple du moteur thermique 4,
$. T_{ice}\#$ : consigne de couple pour le moteur thermique 4,
$. To$: couple appliqué aux roues par le groupe motopropulseur GMP,
$. T_{dwh}$ : couple de perturbation appliqué sur le couple aux roues,
$. W$ : niveau d'énergie du condensateur,
$. j(T_{e1}, T_{e2}, w_{e1}, w_{e2})$ : cette fonction scalaire est définie par la puissance échangée par le condensateur 10 avec les machines électriques, ainsi que l'ensemble des pertes du variateur électrique comprenant les deux machines électriques $M_{e1}$ et $M_{e2}$ et leur condensateur de stockage,
$. PdW$ : puissance de perturbation appliquée sur la dynamique du condensateur.

Les variables décrivant l'état du système sont divisées en deux listes unidimensionnelles ou vecteurs X1 et X2, ici représentées sous leur forme vectorielle transposée :

$$X1 = [w_{e1}, w_{e1}, T_{ice}, T_{dwh}, Td_{ice}, Td_{e1}, Td_{e2}] \qquad (8)$$

$$X2 = [W, PdW] \qquad (9)$$

Le vecteur d'état X1 comporte :

- des valeurs de régime du variateur électrique ;
- des valeurs de couple moteur thermique ;

- des valeurs de perturbation des signaux de couple.

Le vecteur d'état X2 comporte :

- au moins une valeur décrivant l'état énergétique de l'élément tampon d'énergie dans le variateur de vitesses ;
- au moins une valeur de perturbation de cet état énergétique.

Le dispositif de commande 2 de l'invention reçoit un entrée un vecteur V de trois groupes de paramètres d'état du variateur électrique 21 qui sont :

- l'état de puissance électrique ($T_{e1}$, $W_{e1}$) de la machine électrique $M_{e1}$ 11 par une ligne 22 issue du contrôleur 19 ;
- l'état de puissance électrique ($T_{e2}$, $W_{e2}$) de la machine électrique $M_{e2}$ 12 par une ligne 23 issue du contrôleur 20 ;
- l'état de charge électrique (Ucapa) de l'élément tampon d'énergie 10.

En réponse, et en appliquant le procédé de l'invention, le dispositif de commande 2 retourne des signaux de contrôle pour les actionneurs du groupe motopropulseur 1, à savoir :

- un signal de contrôle émis par une ligne 7 à destination du contrôleur 3 du moteur thermique 4 qui permet d'atteindre un objectif de régulation sur le régime du moteur thermique ;
- un signal de contrôle émis par des lignes 8 et 9 à destination des contrôleurs du variateur électrique 21 qui permet d'atteindre simultanément à l'objectif de régulation sur le régime du moteur thermique et un objectif de régulation de couple à la roue To.

Dans un mode préféré de réalisation, le signal de contrôle émis par une ligne 7 est un signal de commande de couple $T_{ice}$# du moteur thermique.

Dans un mode préféré de réalisation, le signal de contrôle émis par des lignes 8 et 9 est une paire de signaux de commande de couple $T_{e1}$# et $T_{e2}$# respectivement transmis à des entrées convenables des contrôleurs 19 et 20 des machines électriques $M_{e1}$ 11 et $M_{e2}$ 12.

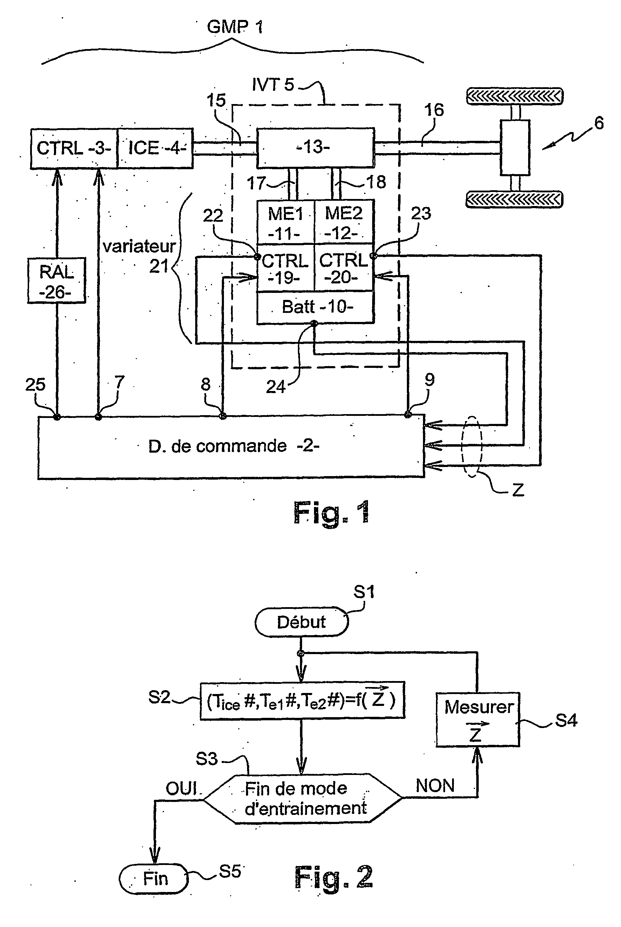

A la figure 2, on a représenté la séquence des opérations principales effectuées par le procédé de commande de l'invention.

Après une opération de début de commande lors d'une étape S1 au cours de laquelle le dispositif de commande de l'invention est configuré puis initialisé, et ultérieurement uniquement initialisé sauf lors d'opérations de maintenance, le contrôle passe à une étape S2 au cours de laquelle les commandes $T_{ice}$#, $T_{e1}$#, $T_{e2}$# des trois actionneurs sont calculées sur la base d'un vecteur de mesure Z qui sera décrit ci-après. A cet effet, le procédé de l'invention a été représenté par une fonction f() prédéterminée, étant entendu que son expression est déterminée de manière analytique ou algorithmique sur la base des informations de la description en fonction des objectifs de la commande qui sont de calculer la commande des trois actionneurs disponibles - moteur thermique et machines électriques - permettant de réaliser le point de fonctionnement requis par les couches supérieures de supervision particulièrement dans le mode de tirage et en utilisant une méthode de suivi de couple (Torque Tracking).

Une fois les valeurs calculées lors de l'étape S2, ces valeurs sont passées aux trois contrôleurs du groupe motopropulseur à savoir $T_{ice}$ pour le contrôleur du moteur thermique, $T_{e1}$ pour le contrôleur de la première machine électrique et $T_{e2}$ pour le contrôleur de la seconde machine électrique. Puis, le contrôle passe à une étape S3 de test de fin de mode d'entraînement spécifique. En effet, le procédé de l'invention peut être arrêté puis un autre mode d'entraînement sélectionné. Si le test S3 est négatif, le contrôle passe à une étape S4 de mesure des valeurs instantanées des variables passées ensuite en arguments à la fonction f() lors de son évaluation lors de l'étape S2 précitée. Les diverses mesures sont collationnées dans un vecteur Z, qui dans un mode préféré de réalisation de l'invention comporte :

- le niveau d'énergie stockée dans l'élément tampon d'énergie du variateur de la transmission infiniment variable, mesuré préférentiellement par la tension à ses bornes ;
- pour chacune des deux machines électriques du variateur le couple $T_{e1}$ ou $T_{e2}$ et la vitesse de rotation $w_{e1}$ ou $w_{e2}$.

Si le test S3 est négatif, le contrôle passe à une étape de fin au cours de laquelle le dispositif de commande de l'invention est désactivé.

Dans un mode particulier de réalisation, le procédé de l'invention comporte les étapes suivantes :

- détermination du niveau de charge Ucapa du variateur 21, du couple à la roue To et du régime du moteur thermique vice,
- obtention de valeurs intermédiaires par régulation du niveau de charge, du couple à la roue et du régime moteur thermique déterminés en fonction de valeurs de consigne, et

- découplage des valeurs intermédiaires en signaux de commande $T_{e1}\#$, $T_{e2}\#$ du variateur 21 et en signal de commande $T_{ics}\#$ du moteur thermique 4.

Dans un mode particulier de réalisation, le procédé de l'invention consiste à effectuer le découplage des signaux intermédiaires en exploitant des valeurs déterminées de :

- régimes ($w_{e1}$, $w_{e2}$) des machines électriques ($M_{e1}$, 11 ; $M_{e2}$, 12),
- régime ($w_{ice}$) du moteur thermique (4),
- couple appliqué ($T_{ice}$) sur le vilebrequin du moteur thermique (4),
- couples électromagnétiques ($T_{e1}$, $T_{e2}$) des machines électriques ($M_{e1}$ 11, $M_{e2}$ 12),
- niveau de charge ($Ucapa$) du variateur électrique,
- facteurs de correction des échanges de puissance électrique dans le variateur,
- facteurs de correction des couples appliqués sur le vilebrequin et sur les roues.

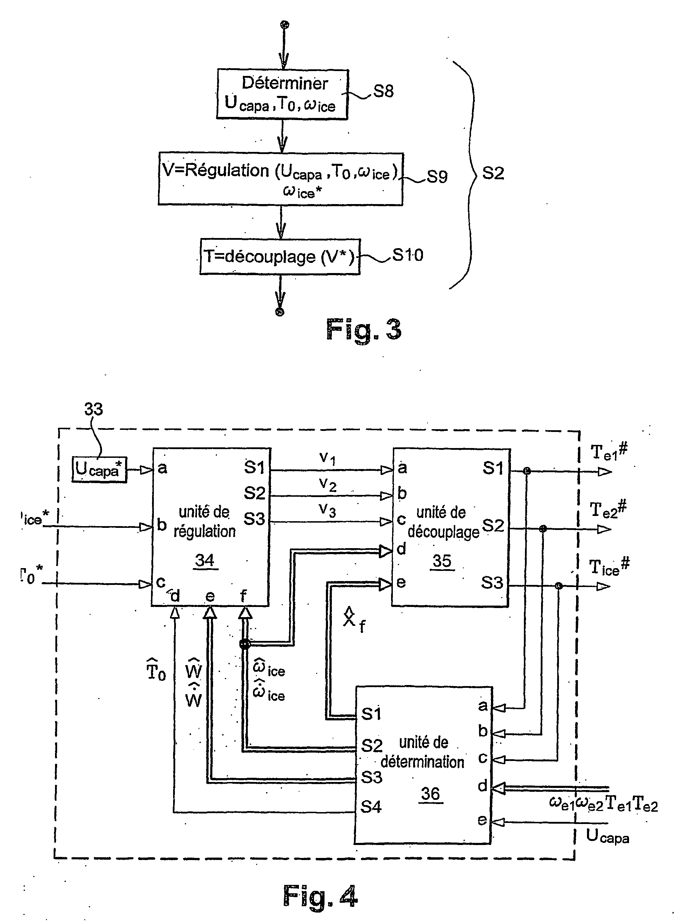

A la figure 3, on a représenté un mode de réalisation d'une étape S2 pour évaluer une consigne du groupe motopropulseur par une fonction f() décrite à l'aide de la figure 2.

Lors d'une étape S8, le procédé de l'invention consiste à effectuer une estimation du régime moteur thermique $^\wedge w_{ice}$, du niveau d'énergie $^\wedge W$, du couple à la roue $^\wedge To$ et d'un vecteur $^\wedge Xf$ rassemblant les grandeurs de simulation de la chaîne électromécanique représentant le variateur électrique de la transmission infiniment variable du groupe motopropulseur donné. Le vecteur $^\wedge Xf$ sera décrit et défini à l'aide de la figure 4.

Une fois l'étape S8 de détermination effectuée, une étape de régulation S9 est effectuée sur la base des données estimées à l'étape S8 et sur la donnée de deux valeurs de consigne qui correspondent à une demande de point de fonctionnement du groupe motopropulseur. Dans un mode particulier de réalisation, adapté notamment à l'architecture à trois couches définie dans le procédé décrit dans la précédente publication FR 2 834 249 du présent demandeur, ces valeurs de consigne sont respectivement la consigne $w_{ice}$* de régime moteur et la consigne To* de couple à la roue. L'étape de régulation S9 produit un vecteur V* de valeurs intermédiaires en appliquant un algorithme de régulation qui sera défini ci-après.

Une fois l'étape S9 de régulation effectuée, une étape de découplage S10 est effectuée sur la base des variables intermédiaires produites à l'étape S9. L'étape de découplage S10 produit le couple de valeurs de consigne à destination des contrôleurs du groupe motopropulseur, à savoir :

- une consigne de couple moteur $T_{ice}\#$ ;
- une consigne de couple pour chacune des machines électriques respectivement $T_{e1\#}$ et $T_{e2\#}$ ;

de sorte que le point de fonctionnement régulé du groupe motopropulseur ($w_{ice}$, To) soit atteint. L'algorithme de découplage sera défini ci-après.

A la Figure 4, on a représenté un mode particulier de réalisation des principales unités du dispositif de commande 2 de l'invention. Dans un mode particulier de réalisation, ces unités constituent la part essentielle du contrôleur de troisième niveau COS qui est décrit dans la précédente publication FR 2 834 249 du présent demandeur et qui reçoit un point optimal de fonctionnement du groupe motopropulseur sous la forme d'un doublet de signaux de consigne ($w_{ice}$,*, To*). Le point optimal de fonctionnement est déterminé par un contrôleur de point de fonctionnement optimal, quelque soit le type de groupe motopropulseur en fonction de l'interprétation de la volonté du conducteur, prenant en compte des paramètres comme le degré d'enfoncement de la pédale d'accélérateur, et/ou d'un régulateur de conduite et de la détection des paramètres de l'environnement du véhicule, comme sa vitesse de roulage ou la pente dans laquelle il est situé, interprétation et détection confiées à un contrôleur de la commande du véhicule.

La structure de commande mise en oeuvre dans le dispositif de commande 2 selon l'invention est basée sur la structure de commande multivariable à trois consignes présentée dans la publication FR 2 834 249 déposé au nom du présent demandeur. L'objet de la présente invention est de construire la couche intermédiaire de commande (COS) dans le mode « tirage » au cours duquel le moteur thermique est commandé par les deux couches supérieures sans être découplé de la transmission infiniment variable.

Le superviseur ou contrôleur OPF, qui exécute l'optimisation du point de fonctionnement du moteur thermique, fournit à l'entrée du contrôleur de troisième couche COS une consigne de régime du moteur thermique. Le superviseur ou contrôleur IVC fournit également une consigne du couple roue. On dispose par ailleurs d'une consigne de tension du condensateur qui sert le plus souvent d'élément tampon d'énergie pour le variateur électrique. A partir de ces trois consignes et des mesures disponibles décrivant l'environnement du véhicule, comme la vitesse du véhicule ou la pente dans laquelle il est engagé, le contrôleur COS génère les consignes de couple pour les trois principaux actionneurs du GMP, à savoir les deux machines électriques (Me1 et Me2) et le moteur thermique dans le mode « tirage » concerné par l'invention.

Dans une première couche, un module exécute une interprétation de la volonté du conducteur en fonction de la détection de l'environnement du véhicule, notamment de la vitesse de déplacement du véhicule. Particulièrement, on détecte que le degré d'enfoncement de la pédale d'accélérateur ou celui de la pédale de frein est nul pour déterminer qu'on est en mode « tirage ».

A la Figure 4, on a représenté un mode particulier de réalisation des principales unités du dispositif de commande 2 de l'invention qui sont :

- une unité de détermination 36 des variables décrivant l'état du système,
- une unité de régulation 34 et
- une unité de découplage 35.

Le paramétrage de ces unités repose sur un modèle de comportement du véhicule, sous la forme d'un modèle de représentation au sens de l'Automatique, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités. Le modèle de conception précité est un modèle multi variable non linéaire.

L'unité de détermination 36 comporte cinq portes d'entrée :

une porte d'entrée a recevant le signal de consigne de couple de la première machine électrique $T_{e1}$ # ;
une porte d'entrée b recevant le signal de consigne de couple de la seconde machine électrique $T_{e2}$ # ;
une porte d'entrée c recevant le signal de consigne de couple du moteur thermique $T_{ice}$ # ;
une porte d'entrée d recevant un vecteur caractérisant l'état électrique des machines électriques $w_{e1}, w_{e2}, T_{e1}, T_{e2}$ ;
une porte d'entrée e recevant un signal de mesure de la tension aux bornes de la super capacité Ucapa.

L'unité de détermination 36 comporte quatre portes de sortie qui sont :

une porte de sortie S1 qui produit un signal d'estimation sous forme d'un vecteur ^Xf transmis à la porte d'entrée e de l'unité de découplage 35 ;
une porte de sortie S2 qui produit un couple de valeurs d'estimation du régime moteur ^$w_{ice}$, et de sa dérivée temporelle ^$w'_{ice}$, couple de valeurs qui est transmis respectivement à la porte d'entrée f de l'unité de régulation 34 et la porte d'entrée d de l'unité de découplage 35 ;
une porte de sortie S3 qui produit un couple de valeurs d'estimation du niveau d'énergie de l'élément tampon d'énergie ^W et de sa variation temporelle ^W' qui est transmis à la porte d'entrée e de l'unité de régulation ;
une porte de sortie S4 qui produit un signal d'estimation du couple moteur ^T0 qui est transmis à la porte d de l'unité de régulation 34.

L'unité de détermination 36 comporte un circuit de construction de ^Xf a pour rôle de construire le signal d'estimation ^Xf qui est représenté par le vecteur suivant qui comporte neuf composantes vectorielles :

$$\hat{X}_f = \begin{bmatrix} \hat{W} & \hat{\omega}_{e1} & \hat{\omega}_2 & \hat{T}_{lce} & \hat{T}_{e1} & \hat{T}_{e2} & \hat{T}_{dwh} & \hat{T}_{dice} & \hat{P}_{dW} \end{bmatrix} \qquad (16)$$

L'estimation de ces signaux est calculée par un observateur linéaire construit à partir du modèle de conception choisi, par mise en oeuvre des techniques connues d'Automatique des Systèmes linéaires. On pourra se reporter aux ouvrages concernant la reconstructions d'état de tels systèmes et particulièrement à l'ouvrage de Philippe de Larminat, « Automatique - Commande des systèmes linéaires», 2° éditions, Hermès, Science Publication 2000.

Les gains de cet observateur constituent des paramètres de réglage de l'unité de détermination.

L'unité de régulation 34 comporte six portes d'entrée :

une porte d'entrée a recevant un signal de consigne de la tension aux bornes du tampon en énergie 10 ;
une porte d'entrée b recevant un signal de consigne du régime moteur $w_{ice}$ * ;
une porte d'entrée c recevant un signal de consigne du couple moteur To* ;
une porte d'entrée d recevant un signal d'estimation du couple moteur ^To ;
une porte d'entrée e recevant un signal d'estimation du niveau d'énergie ^W ou de sa variation ^W' ;
une porte d'entrée f recevant un signal d'estimation du régime moteur ^$w_{ice}$ et de sa variation ^$w'_{ice}$.

L'unité de régulation 34 comporte trois portes de sortie qui sont respectivement :

une porte de sortie S1 de signal de commande intermédiaire v1 ;
une porte de sortie S2 de signal de commande intermédiaire v2 ;
une porte de sortie S3 de signal de commande intermédiaire v3.

A partir des trois consignes :

- de niveau d'énergie de l'élément tampon W* ;
- de régime du moteur thermique $w_{ice}$* ; et
- de couple aux roues To*,

l'unité de régulation 34 construit trois signaux de commande intermédiaires (v1, v2, v3) correspondant respectivement à chaque consigne, à partir des informations fournies par l'unité de détermination :

- le signal v1 est calculé par un circuit incorporant un régulateur de type proportionnel dérivé à partir de la consigne de charge de l'élément tampon d'énergie comme la tension aux bornes d'un condensateur 10 ;
- le signal v2 est calculé par un circuit incorporant un régulateur de type proportionnel dérivé à partir de la consigne de régime thermique et de l'estimée du régime thermique ;
- le signal v3 est calculé par un régulateur de type proportionnel à partir de la consigne de couple aux roues et de l'estimée du couple aux roues.

L'unité de découplage 35 comporte cinq portes d'entrée :

une porte d'entrée a recevant le signal de commande intermédiaire v1 issu de la sortie S1 de l'unité de régulation 34 ;
une porte d'entrée b recevant le signal de commande intermédiaire v2 issu de la sortie S2 de l'unité de régulation 34 ;
une porte d'entrée c recevant le signal de commande intermédiaire v3 issu de la sortie S3 de l'unité de régulation 34 ;
une porte d'entrée d recevant un signal d'estimation du niveau d'énergie $^\wedge W_{ice}$ ou de sa variation $^\wedge{}'W_{ice}$ ;
une porte d'entrée e recevant un signal d'estimation d'un vecteur de contrôle Xf.

L'unité de découplage 35 comporte trois portes de sortie qui sont respectivement :

une porte de sortie S1 de consigne de couple de la première machine électrique $T_{e1}$ # ;
une porte de sortie S2 de consigne de couple de la seconde machine électrique $T_{e2}$ # ;
une porte de sortie S3 de consigne de couple du moteur thermique $T_{ice}$ #.

A partir des signaux de commande intermédiaires (v1, v2, v3) produits par l'unité de régulation 34 et à partir des estimés du vecteur $^\wedge$Xf sur l'état du système fournies par l'unité de détermination 36, l'unité de découplage 35 construit les signaux de commande de couple moteur thermique $T_{ice}$#, et des deux couples électromagnétiques $T_{e1}$# et $T_{e2}$# des machines électriques du variateur 21. L'étape concernée du procédé de l'invention comporte les sous étapes suivantes :

- une étape de découplage des signaux de commande intermédiaires (v1, v2, v3) basée sur l'inversion du modèle de conception par dérivations successives des sorties telle que cette méthode est exposée notamment dans l'ouvrage de A. Isidori, « Non Linear Control Systems », 2d Edition, Springer-Verlag, 1989, pour produire un triplet de commandes intermédiaires (u1, u2, u3) ;
- une étape d'intégration des deux premiers signaux intermédiaires (u1, u2) pour produire le signal de contrôle du couple à la roue sous la forme du doublet de commande des couples électromagnétiques ($T_{e1}$#, $T_{e2}$#) ;
- une étape de saturation du signal u3 par le couple thermique maximal dépendant du régime thermique, le signal de commande $T_{ice}$# est déduit du signal u3 par un opérateur retard discret.

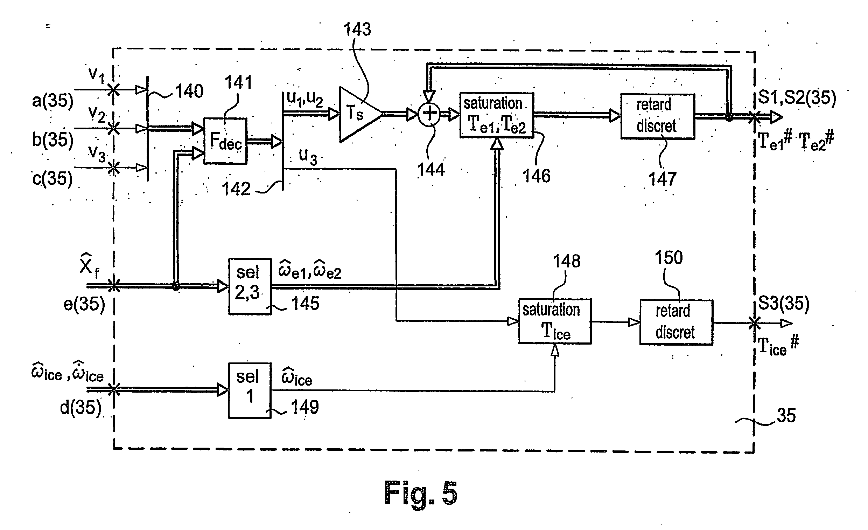

À la figure 5, on a représenté un mode particulier de réalisation de l'unité de découplage 35.
Les trois signaux de régulation $V_1$, $V_2$, $V_3$ sont transmis à un rassembleur vectoriel 140 dont la sortie transmet en séquence des trois signaux à une première borne d'entrée d'un circuit 141 qui réalise l'inversion du modèle de conception par dérivations successives des sorties.
Le circuit 141 d'inversion du modèle comporte aussi une seconde borne d'entrée connectée à l'entrée e(35) qui reçoit le vecteur d'estimation $^\wedge$Xf. De ce fait, l'inversion travaille à la fois sur les composantes de régulation $V_1$, $V_2$ et $V_3$ et sur les composants du vecteur d'estimation $^\wedge$Xf.

Les trois signaux de sortie qui correspondent à l'inversion du modèle sont désignés respectivement par U1, U2 et U3 et sont transmis à un séparateur vectoriel 142 dont la première borne de sortie sélectionne la première paire de valeurs U1 et U2, qui sont fournies à l'entrée d'un circuit d'intégration 143 - 147, pour obtenir les deux signaux de commande ($T_{e1}$#, $T_{e2}$#) à destination des circuits de contrôle des machines électriques du variateur.

Dans ce mode particulier de réalisation, le circuit d'intégration comporte un gain 143 réglé avec une constante de temps Ts. Le signal de sortie du gain 143 qui a traité également les composantes U1 et U2, est transmis à une borne d'entrée d'un additionneur 144. La borne de sortie de l'additionneur 144 est connectée à une première borne d'entrée d'un circuit de saturation 146. Le vecteur d'estimation ^Xf est aussi fourni à une borne d'entrée d'un bloc de sélection des composantes 2 et 3, référencé 145 dont la borne de sortie est connectée directement à une seconde borne d'entrée du circuit de saturation 146. Il ressort de ce schéma que le circuit de saturation 146 travaille d'une part à partir de la valeur des composantes d'inversion U1 et U2, et d'autre part à partir des composantes d'estimation des vitesse de rotation des deux machines électriques $^{\wedge}w_{e1}$ et $^{\wedge}w_{e2}$.

L'unité de découplage 35 comporte aussi un bloc 149 de sélection de composante 1 dont la borne d'entrée reçoit le couple de valeurs représentatives de l'estimation du régime moteur $^{\wedge}w_{ice}$ de l'estimation de sa variation temporelle $^{\wedge}w'_{ice}$.

La borne de sortie du bloc de sélection 149 de composante transmet ainsi le signal d'estimation du régime moteur $^{\wedge}w_{ice}$ à une première borne d'entrée d'un circuit de saturation 148. Une seconde borne d'entrée du circuit de saturation 148 est connectée au séparateur vectoriel 142 pour recevoir le troisième signal du modèle U3. Le circuit de saturation 148 comporte des moyens pour réaliser la saturation signal de commande $T_{ice}$ qui détermine la commande du couple moteur.

Pour permettre de respecter le séquence du procédé de l'invention, on connecte sur la borne de sortie du circuit 148 un circuit 150 qui ajoute un retard discret pour l'élaboration de la commande $T_{ice}$# du couple moteur à la borne de sortie S3(35) de l'unité 35 de découplage.

D'une manière générale, l'unité de découplage 35 du dispositif de l'invention comporte :

- un rassembleur vectoriel 140 rassemblant des valeurs intermédiaires issues de la régulation du niveau de charge, du couple aux roues et du régime du moteur thermique déterminés ;
- un module 141 de découplage non linéaire recevant la sortie du rassembleur 140 et l'ensemble des variables déterminées ;
- un module 143 appliquant aux deux premières sorties du module 141 un gain égal à la période d'échantillonnage Ts du système ;
- un opérateur d'addition 144 ajoutant au signal de sortie du module 143 le premier signal de sortie de ladite unité ;
- un circuit 145 appliquant à la sortie de l'opérateur 144 une saturation en fonction du couple électromagnétique maximal qui dépend des régimes déterminés à chaque machine électrique
- un circuit 147 appliquant un retard au signal de sortie du circuit de saturation 146 de façon à produire des signaux de commande de couple $T_{e1}$#, $T_{e2}$# des deux machines électriques,
- un circuit 148 appliquant à la troisième sortie du module 141 une saturation en fonction du couple maximal du moteur thermique qui dépend du régime déterminé du moteur thermique, et
- un circuit 150 appliquant un retard au signal de sortie du circuit de saturation 148 de façon à produire un signal de commande $T_{ice}$# du couple du moteur thermique.

Dans un mode particulier de réalisation, le mode d'entraînement spécifique exécuté par le procédé de l'invention assure la régulation de ralenti du moteur thermique tout en contrôlant le couple (To) fourni par le groupe motopropulseur.

En mode « rétro », le moteur thermique se trouve dans un mode de fonctionnement en coupure d'injection sous le contrôle d'un contrôleur indépendant du dispositif de commande proprement dit de l'invention. Quand un tel état d'entraînement est alors détecté, le dispositif de commande 2 laisse le contrôle du moteur thermique à un contrôleur 26 autonome de régime de coupure d'injection. Le contrôleur 26 de coupure d'injection est lui-même connecté par une ligne spécifique à une entrée correspondante de contrôle de ralenti sur le contrôleur 3 du moteur thermique 4. Dans le même temps, le dispositif de commande 2 de l'invention exécute le contrôle de son objectif de régulation du régime du moteur thermique en produisant des signaux de consigne $T_{e1}$# et $T_{e2}$# qui permettent ainsi de poursuivre les objectifs de régulation de la charge électrique de l'élément tampon 10.

Après une opération de début de commande lors d'une étape S1 au cours de laquelle le dispositif de commande de l'invention est configuré puis initialisé, et ultérieurement uniquement initialisé sauf lors d'opérations de maintenance, le contrôle passe à une étape S2 au cours de laquelle les commandes $T_{e1}$#, $T_{e2}$# des deux actionneurs sont calculées sur la base d'un vecteur de mesure Z qui sera décrit ci-après. A cet effet, le procédé de l'invention a été représenté par une fonction $f_{retro}$() prédéterminée, étant entendu que son expression est déterminée de manière analytique ou algorithmique sur la base des informations de la description en fonction des objectifs de la commande qui sont de calculer la commande des deux actionneurs disponibles sur les machines électriques et permettant de réaliser le point de fonctionnement requis par les couches supérieures de supervision particulièrement dans le mode d'entraînement « rétro ».

Une fois le couple de valeurs calculé lors de l'étape S2, ces valeurs sont passées aux deux contrôleurs du groupe motopropulseur à savoir $T_{e1}$ pour le contrôleur de la première machine électrique et $T_{e2}$ pour le contrôleur de la seconde machine électrique. Puis, le contrôle passe à une étape S3 de test de fin de mode d'entraînement spécifique. En effet, le procédé de l'invention peut être arrêté puis un autre mode d'entraînement sélectionné. Si le test S3 est négatif, le contrôle passe à une étape S4 de mesure des valeurs instantanées des variables passées ensuite en arguments à la fonction f() lors de son évaluation lors de l'étape S2 précitée. Les diverses mesures sont collationnées dans un vecteur Z, qui dans un mode préféré de réalisation de l'invention comporte :

- le niveau d'énergie stockée dans l'élément tampon d'énergie du variateur de la transmission infiniment variable, mesuré préférentiellement par la tension à ses bornes ;

pour chacune des deux machines électriques du variateur le couple $T_{e1}$ ou $T_{e2}$ et la vitesse de rotation $w_{e1}$ ou $w_{e2}$.

Si le test S3 est négatif, le contrôle passe à une étape de fin au cours de laquelle le dispositif de commande de l'invention est désactivé.

En mode rétro, le procédé de l'invention comporte les étapes suivantes :

- détermination du niveau de charge du variateur (21) et du régime ($w_{ice}$) du moteur thermique,
- obtention de valeurs intermédiaires par régulation du niveau de charge et du régime du moteur thermique déterminés en fonction de valeurs de consignes et

découplage des valeurs intermédiaires en signaux de commande du variateur électrique.

Dans un mode particulier de réalisation, le procédé de l'invention consiste à effectuer le découplage des signaux intermédiaires en exploitant des valeurs déterminées de :

- régimes des machines électriques,
- couple appliqué sur le vilebrequin du moteur thermique,
- couples électromagnétiques des machines électriques,
- niveau de charge du variateur,
- facteurs de correction des échanges de puissances électriques dans le variateur,

facteurs de correction des couples appliqués sur le vilebrequin et sur les roues

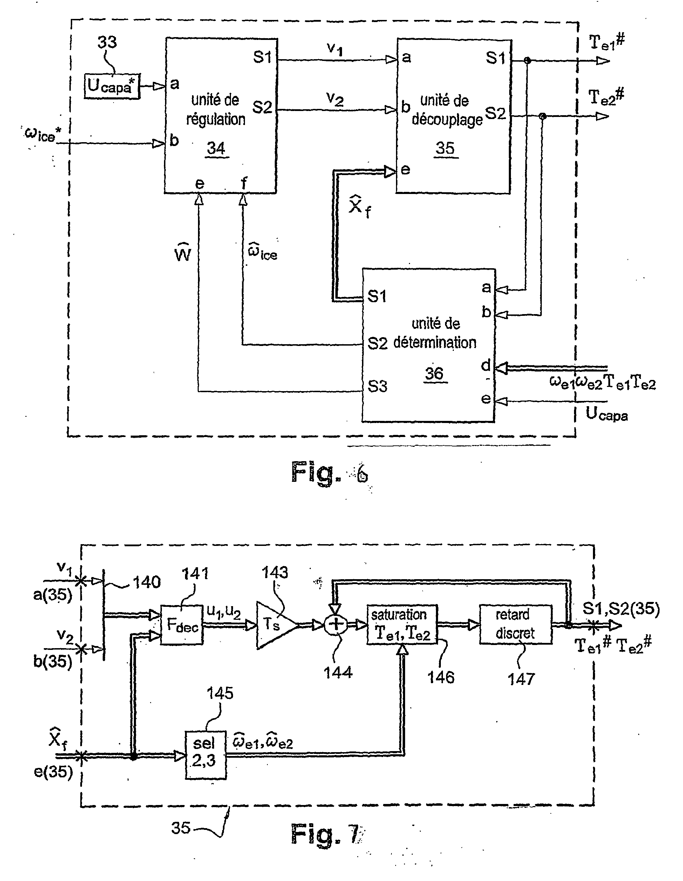

Lors d'une étape S8, le procédé de l'invention consiste à effectuer une estimation du régime moteur thermique $^{\wedge}w_{ice}$, du niveau d'énergie $^{\wedge}W$, et d'un vecteur $^{\wedge}Xf$ rassemblant les grandeurs de simulation de la chaîne électromécanique représentant le variateur électrique de la transmission infiniment variable du groupe motopropulseur donné. Le vecteur $^{\wedge}Xf$ sera décrit et défini à l'aide de la figure 6.

Une fois l'étape S8 de détermination effectuée, une étape de régulation S9 est effectuée sur la base des données estimées à l'étape S8 et sur la donnée d'une valeur de consigne qui correspond à une demande de point de fonctionnement du groupe motopropulseur. Dans un mode particulier de réalisation, adapté notamment à l'architecture à trois couches définie dans le Procédé décrit dans la précédente publication FR 2 834 249 du présent demandeur, cette valeur de consigne est la consigne $w_{ice}$* de régime moteur. L'étape de régulation S9 produit un vecteur V* de valeurs intermédiaires en appliquant un algorithme de régulation qui sera défini ci-après.

Une fois l'étape S9 de régulation effectuée, une étape de découplage S10 est effectuée sur la base des variables intermédiaires produites à l'étape S9. L'étape de découplage S10 produit le couple de valeurs de consigne à destination des contrôleurs du groupe motopropulseur sous la dépendance du dispositif de commande 2 de l'invention, à savoir une consigne de couple pour chacune des machines électriques respectivement $T_{e1}$# et $T_{e2}$# ; de sorte que le point de fonctionnement régulé du groupe motopropulseur ($w_{ice}$) soit atteint. L'algorithme de découplage sera défini ci-après.

A la Figure 6, on a représenté un mode particulier de réalisation des principales unités du dispositif de commande 2 de l'invention. Dans un mode particulier de réalisation, ces unités constituent la part essentielle du contrôleur de troisième niveau COS qui est décrit dans la publication FR 2834249 du présent demandeur et qui reçoit un point optimal de fonctionnement du groupe motopropulseur sous la forme d'un doublet de signaux de consigne ($w_{ice}$,*, To*). Le point optimal de fonctionnement est déterminé par un contrôleur de point de fonctionnement optimal, quelque soit le type de groupe motopropulseur en fonction de l'interprétation de la volonté du conducteur, prenant en compte des paramètres comme le degré d'enfoncement de la pédale d'accélérateur, et/ou d'un régulateur de conduite et de la détection des paramètres de l'environnement du véhicule, comme sa vitesse de roulage ou la pente dans laquelle il est situé, interprétation et détection confiées à un contrôleur de la commande du véhicule.

La structure de commande mise en oeuvre dans le dispositif de commande 2 selon l'invention est basée sur la structure de commande multivariable à trois consignes présentée dans la publication FR 2834249. En mode rétro, on construit une couche intermédiaire de commande (COS) où le moteur thermique n'est pas commandé par les deux couches supérieures, mais travaille en coupure d'injection sans être découplé de la transmission infiniment variable.

Le superviseur ou contrôleur OPF qui exécute l'optimisation du point de fonctionnement du moteur thermique fournit à l'entrée du contrôleur de troisième couche COS une consigne de régime du moteur thermique. On dispose par ailleurs d'une consigne de tension du condensateur qui sert le plus souvent d'élément tampon d'énergie pour le variateur électrique. A partir de ces deux consignes et des mesures disponibles décrivant l'environnement du véhicule, comme la vitesse du véhicule ou la pente dans laquelle il est engagé, le contrôleur COS génère les consignes de couple pour les deux principaux actionneurs du GMP, à savoir les deux machines électriques (Me1 et Me2) dans le mode « rétro ».

Dans une première couche, un module exécute une interprétation de la volonté du conducteur en fonction de la détection de l'environnement du véhicule, notamment de la vitesse de déplacement du véhicule. Particulièrement, on détecte que le degré d'enfoncement de la pédale d'accélérateur et celui de la pédale de frein sont nuls pour déterminer qu'on est en mode « rétro ».

A la Figure 6, on a représenté un mode particulier de réalisation des principales unités du dispositif de commande 2 de l'invention qui sont :

- une unité de détermination 36 des variables décrivant l'état du système,
- une unité de régulation 34, et
- une unité de découplage 35.

Le paramétrage de ces unités repose sur un modèle de comportement du véhicule, sous la forme d'un modèle de représentation au sens de l'Automatique, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités, d'autre part. Le modèle de conception précité est un modèle multi variable non linéaire.

L'unité de détermination 36 comporte quatre portes d'entrée :

Une porte d'entrée a recevant le signal de consigne de couple de la première machine électrique $T_{e1}$ # ;
Une porte d'entrée b recevant le signal de consigne de couple de la second machine électrique $T_{e2}$ # ;
Une porte d'entrée d recevant un vecteur caractérisant l'état électrique des machines électriques $w_{e1}$, $w_{e2}$, $T_{e1}$, $T_{e2}$ ;
Une porte d'entrée e recevant un signal de mesure de la tension aux bornes de la super capacité Ucapa.

L'unité de détermination 36 comporte trois portes de sortie qui sont :

Une porte de sortie S1 qui produit un signal d'estimation sous forme d'un vecteur ^Xf transmis à la porte d'entrée e de l'unité de découplage 35 ;
Une porte de sortie S2 qui produit une valeur d'estimation du régime moteur ^$w_{ice}$, transmis à la porte d'entrée f de l'unité de régulation 34 ;
Une porte de sortie S3 qui produit une valeur d'estimation du niveau d'énergie de l'élément tampon d'énergie ^W qui est transmis à la porte d'entrée e de l'unité de régulation.

L'unité de détermination 36 comporte une unité de construction de ^Xf qui a pour rôle de construire le signal d'estimation ^Xf qui est représenté par le vecteur suivant qui comporte neuf composantes vectorielles :

$$\hat{X}_f = \begin{bmatrix} \hat{W} & \hat{\omega}_{e1} & \hat{\omega}_2 & \hat{T}_{ice} & \hat{T}_{e1} & \hat{T}_{e2} & \hat{T}_{dwh} & \hat{T}_{dice} & \hat{P}_{dW} \end{bmatrix} \qquad (16)$$

L'estimation de ces signaux est calculée par un observateur linéaire construit à partir du modèle de conception choisi, par mise en oeuvre des techniques connues d'Automatique des Systèmes linéaires. On pourra se reporter aux ouvrages concernant la reconstructions d'état de tels systèmes et particulièrement à l'ouvrage de Philippe de Larminat, « Automatique - Commande des systèmes linéaires », 2° éditions, Hermès, Science Publication 2000.

Les gains de cet observateur constituent des paramètres de réglage de l'unité de détermination.

L'unité de régulation 34 comporte quatre portes d'entrée :

Une porte d'entrée a recevant un signal de consigne de la tension aux bornes du tampon en énergie 10 ;
Une porte d'entrée b recevant un signal de consigne du régime moteur $w_{ice}$ * ;
Une porte d'entrée e recevant un signal d'estimation du niveau d'énergie de l'élément tampon d'énergie ^W ;

Une porte d'entrée f recevant un signal d'estimation du régime moteur $^\wedge w_{ice}$.

L'unité de régulation 34 comporte deux portes de sortie qui sont respectivement :

Une porte de sortie S1 de signal de commande intermédiaire v1 ;
Une porte de sortie S2 de signal de commande intermédiaire v2.

L'unité de régulation 34 comporte deux unités de calcul respectivement du premier signal de commande intermédiaire v1 et du second signal de commande intermédiaire v2.

L'unité de calcul du premier signal de commande intermédiaire v1 exécute à chaque cycle de calcul le calcul d'un régulateur de type proportionnel à partir de la consigne de charge de l'élément tampon d'énergie comme la tension aux bornes d'un condensateur 10.

L'unité de calcul du second signal de commande intermédiaire v2 exécute à chaque cycle de calcul le calcul d'un régulateur de type proportionnel dérivé à partir de la consigne de régime thermique et de l'estimée du régime thermique

L'unité de découplage 35 comporte trois portes d'entrée :

Une porte d'entrée a recevant le signal de commande intermédiaire v1 issu de la sortie S1 de l'unité de régulation 34;
Une porte d'entrée b recevant le signal de commande intermédiaire v2 issu de la sortie S1 de l'unité de régulation 34;
une porte d'entrée e recevant un signal d'estimation d'un vecteur de contrôle Xf.

L'unité de découplage 35 comporte deux portes de sortie qui sont respectivement :

Une porte de sortie S1 de consigne de couple de la première machine électrique $T_{e1}\#$ ;
Une porte de sortie S2 de consigne de couple de la seconde machine électrique $T_{e2}\#$.

A partir des signaux de commande intermédiaire (v1, v2) produits par l'unité de régulation 34 et à partir des estimés du vecteur $^\wedge Xf$ sur l'état du système fournies par l'unité de détermination 36, l'unité de découplage 35 construit les signaux de commande de des deux couples électromagnétiques $T_{e1}\#$ et $T_{e2}\#$ des machines électriques du variateur 21. L'étape concernée du procédé de l'invention comporte les sous étapes suivantes :

- une étape de découplage des signaux de commande intermédiaires (v1, v2) basée sur l'inversion du modèle de conception par dérivations successives des sorties telle que cette méthode est exposée notamment dans l'ouvrage de A. Isidori, « Non Linear Control Systems », 2d Edition, Springer-Verlag, 1989, pour produire un doublet de commandes intermédiaires (u1, u2) ;
- une étape d'intégration des deux signaux intermédiaires (u1, u2) pour produire les commandes des couples élec-tromagnétiques ($T_{e1}\#$, $T_{e2}\#$).

À la figure 7, on a représenté un mode particulier de réalisation de l'unité de découplage 35. Sur cette figure, les mêmes éléments que ceux de la figure 3, portent les mêmes et les numéros de référence et ne sont pas plus décrits.

Les deux signaux de régulation V1, V2 sont transmis à un rassembleur vectoriel 140 dont la sortie transmet en séquence des trois signaux à une première borne d'entrée d'un circuit 141 qui réalise l'inversion du modèle de conception par dérivations successives des sorties. On se reportera notamment à l'ouvrage de A. Isidori , «Non Linear Control SYSTEMS» Springer-Verlag 1989.

Le circuit 141 d'inversion du modèle comporte aussi une seconde borne d'entrée connectée à l'entrée e(35) qui reçoit le vecteur d'estimation $^\wedge Xf$. De ce fait, l'inversion travaille à la fois sur les composantes de régulation V1, V2 et sur les composants du vecteur d'estimation $^\wedge Xf$.

Les deux signaux de sortie qui correspondent à l'inversion du modèle sont désignés respectivement par u1, u2. Ils sont fournis à l'entrée d'un circuit d'intégration 143 - 147, pour obtenir les deux signaux de commande (Te1 #, Te2#) à destination des circuits de contrôle des machines électriques du variateur.

Dans ce mode particulier de réalisation, le circuit d'intégration comporte un intégrateur 143 réglé avec une constante de temps Ts. Le signal de sortie de l'intégrateur 143 qui a traité également les composantes U1 et U2, est transmis à une borne d'entrée d'un additionneur 144. La borne de sortie de l'additionneur 144 est connectée à une première borne d'entrée d'un circuit de saturation 146. Le vecteur d'estimation $^\wedge Xf$ est aussi fourni à une borne d'entrée d'un bloc de sélection des composantes 2 et 3, référencé 145 dont la borne de sortie est connectée directement à une seconde borne d'entrée du circuit de saturation 146. Il ressort de ce schéma que le circuit de saturation 146 travaille d'une part à partir de la valeur des composantes d'inversion U1 et U2, et d'autre part à partir des composantes d'estimation des vitesse de rotation des deux machines électriques $^\wedge we1$ et $^\wedge we2$.

En mode rampage en couple, le dispositif de commande 2 retourne des signaux de contrôle pour les actionneurs du groupe motopropulseur 1, à savoir :

- un signal de contrôle émis par une ligne 25 pour mettre en service un contrôleur de ralenti 26 lorsque le dispositif de commande 2 place le véhicule dans le mode d'entraînement spécifique dit de rampage en couple et qui est lui-même connecté au contrôleur 3 du moteur thermique 4 ;
- un signal de contrôle émis par des lignes 8 et 9 à destination des contrôleurs du variateur électrique 21 qui permet d'atteindre simultanément l'objectif de régulation sur le régime du moteur thermique et un objectif de régulation de couple à la roue To.

Dans un mode préféré de réalisation, le signal de contrôle émis par des lignes 8 et 9 est une paire de signaux de commande de couple $T_{e1}\#$ et $T_{e2}\#$ respectivement transmis à des entrées convenables des contrôleurs 19 et 20 des machines électriques $M_{e1}$ 11 et $M_{e2}$ 12.

Le dispositif de commande 2 de l'invention coopère avec un moyen permettant de modéliser le couple moteur produit par la combustion en mode de ralenti sous la forme d'une fonction $T_{tice}$ et une partie de gestion du vilebrequin permettant de modéliser la transformation de l'énergie de combustion en énergie mécanique de rotation. La fonction $T_{tice}$ dont l'expression dépend du véhicule modélisé, produit, à chaque instant défini par le séquenceur du dispositif de l'invention, des signaux ou valeurs numériques représentatifs d'un couple moteur thermique $T_{ice}$ et d'une vitesse de rotation ou régime du moteur thermique $w_{ice}$.

Après une opération de début dé commande lors d'une étape S1 au cours de laquelle le dispositif de commande de l'invention est configuré puis initialisé, et ultérieurement uniquement initialisé sauf lors d'opérations de maintenance, le contrôle passe à une étape S2 au cours de laquelle les commandes $T_{e1}\#$, $T_{e2}\#$ des deux actionneurs sont calculées sur la base d'un vecteur de mesure Z qui sera décrit ci-après. A cet effet, le procédé de l'invention a été représenté par une fonction f() et par une fonction $f_{ral}$() prédéterminées. Les deux fonctions sont déterminées de manière analytique ou algorithmique sur la base des informations de la description en fonction des objectifs de la commande qui sont de calculer la commande des deux actionneurs disponibles sur les machines électriques et de réaliser le point de fonctionnement requis par les couches supérieures de supervision particulièrement dans le mode d'entraînement « rampage en couple » selon la relation $(T_{e1}\#, T_{e2}\#) = f(Z)$, tandis que le contrôleur de ralenti applique un contrôle représenté par la relation $w_{ice}\# = f_{ral}.$(), fonction dans laquelle les arguments sont connus de l'homme de métier pour permettre la gestion du régime de ralenti.

Une fois le couple de valeurs calculé lors de l'étape S2, ces valeurs sont passées aux trois contrôleurs du groupe motopropulseur à savoir une valeur de contrôle de régime de ralenti pour le contrôleur 26 du moteur thermique, $T_{e1}$ pour le contrôleur de la première machine électrique et $T_{e2}$ pour le contrôleur de la seconde machine électrique. Puis, le contrôle passe à une étape S3 de test de fin de mode d'entraînement spécifique. En effet, le procédé de l'invention peut être arrêté puis un autre mode d'entraînement sélectionné. Si le test S3 est négatif, le contrôle passe à une étape S4 de mesure des valeurs instantanées des variables passées ensuite en arguments à la fonction f() lors de son évaluation lors de l'étape S2 précitée. Les diverses mesures sont collationnées dans un vecteur Z, qui dans un mode préféré de réalisation de l'invention comporte :

- le niveau d'énergie stockée dans l'élément tampon d'énergie du variateur de la transmission infiniment variable, mesuré préférentiellement par la tension à ses bornes ;
- pour chacune des deux machines électriques du variateur le couple $T_{e1}$ ou $T_{e2}$ et la vitesse de rotation $w_{e1}$ ou $w_{e2}$.

Si le test S3 est négatif, le contrôle passe à une étape de fin au cours de laquelle le dispositif de commande de l'invention est désactivé.

Dans un mode particulier de réalisation, le mode d'entraînement spécifique commandé dans le procédé de l'invention permet d'annuler le couple fourni par le groupe motopropulseur en dissipant l'énergie fournie par le moteur thermique.

Dans un mode particulier de réalisation, le procédé de l'invention comporte les étapes suivantes :

- détermination du niveau de charge du variateur et du couple à la roue,
- obtention de valeurs intermédiaires par régulation du niveau de charge et du couple à la roue déterminés, en fonction de valeurs de consigne, et
- découplage des valeurs intermédiaires en signaux de commande du variateur électrique.

Dans un mode particulier de réalisation, le procédé de commande de l'invention consiste à effectuer le découplage des signaux intermédiaires en exploitant des valeurs déterminées de :

- régimes des machines électriques ;
- couple appliqué sur le vilebrequin du moteur thermique ;
- couples électromagnétiques des machines électriques ;
- niveau de charge du variateur électrique ;
- facteurs de correction des échanges de puissance électriques dans le variateur 21 ;
- facteurs de correction des couples appliqués sur le vilebrequin et sur les roues.

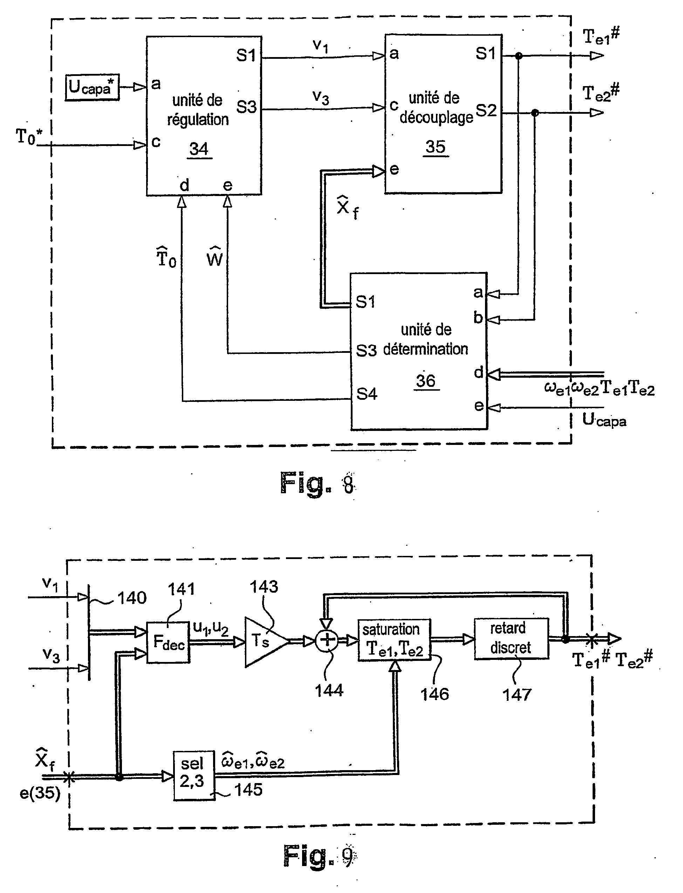

Lors d'une étape S8, le procédé de l'invention consiste à effectuer une estimation du niveau d'énergie ^W, du couple à la roue ^To et d'un vecteur ^Xf rassemblant les grandeurs de simulation de la chaîne électromécanique représentant le variateur électrique de la transmission infiniment variable du groupe motopropulseur donné. Le vecteur ^Xf sera décrit et défini à l'aide de la figure 8.

Une fois l'étape S8 de détermination effectuée, une étape de régulation S9 est effectuée sur la base des données estimées à l'étape S8 et sur la donnée d'une valeur de consigne qui correspond à une demande de point de fonctionnement du groupe motopropulseur. Dans un mode particulier de réalisation, adapté notamment à l'architecture à trois couches définie dans le procédé décrit dans la précédente publication FR 2 834 249 du présent demandeur, cette valeur de consigne est la consigne To* de couple à la roue. L'étape de régulation S9 produit un vecteur V* de valeurs intermédiaires en appliquant un algorithme de régulation qui sera défini ci-après.

Une fois l'étape S9 de régulation effectuée, une étape de découplage S10 est effectuée sur la base des variables intermédiaires produites à l'étape S9. L'étape de découplage S10 produit le couple de valeurs de consigne à destination des contrôleurs du groupe motopropulseur sous la dépendance du dispositif de commande 2 de l'invention, à savoir une consigne de couple pour chacune des machines électriques respectivement $T_{e1}$# et $T_{e2}$#, de sorte que le point de fonctionnement régulé du groupe motopropulseur (To) soit atteint. L'algorithme de découplage sera défini ci-après.

A la Figure 8, on a représenté un mode particulier de réalisation des principales unités du dispositif de commande 2 de l'invention. Dans un mode particulier de réalisation, ces unités constituent la part essentielle du contrôleur de troisième niveau COS qui est décrit dans la publication FR2834249 et qui reçoit un point optimal de fonctionnement du groupe motopropulseur sous la forme d'un doublet de signaux de consigne ($w_{ice}$,*, To*). Le point optimal de fonctionnement est déterminé par un contrôleur de point de fonctionnement optimal, quelque soit le type de groupe motopropulseur en fonction de l'interprétation de la volonté du conducteur, prenant en compte des paramètres comme le degré d'enfoncement de la pédale d'accélérateur, et/ou d'un régulateur de conduite et de la détection des paramètres de l'environnement du véhicule, comme sa vitesse de roulage ou la pente dans laquelle il est situé, interprétation et détection confiées à un contrôleur de la commande du véhicule.

En mode rampage de couple, on construit une couche intermédiaire de commande (COS) où le moteur thermique n'est pas commandé par les deux couches supérieures, mais travaille en régime de ralenti sans être découplé de la transmission infiniment variable.

Le superviseur ou contrôleur IVC fournit à l'entrée du contrôleur de troisième couche COS une consigne de couple roue. On dispose par ailleurs d'une consigne de tension du condensateur qui sert le plus souvent d'élément tampon d'énergie pour le variateur électrique. A partir de ces deux consignes et des mesures disponibles décrivant l'environnement du véhicule, comme la vitesse du véhicule ou la pente dans laquelle il est engagé, le contrôleur COS génère les consignes de couple pour les deux principaux actionneurs du GMP, à savoir les deux machines électriques (Me1 et Me2) dans le mode « rampage en couple » concerné par l'invention.

Dans une première couche, un module exécute une interprétation de la volonté du conducteur en fonction de la détection de l'environnement du véhicule, notamment de la vitesse de déplacement du véhicule. Particulièrement, on détecte que le degré d'enfoncement de la pédale d'accélérateur est nul et que celui de la pédale de frein n'est pas nul pour déterminer qu'on est en mode « rampage en couple ».

A la Figure 8, on a représenté un mode particulier de réalisation des principales unités composant le contrôleur de troisième niveau COS du dispositif de commande 2 de l'invention et qui sont :

- une unité de détermination 36 des variables décrivant l'état du système,
- une unité de régulation 34, et
- une unité de découplage 35.

Le paramétrage de ces unités repose sur un modèle de comportement du véhicule, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités. Le modèle de conception précité est un modèle de conception multi variable non linéaire.

L'unité de détermination 36 comporte quatre portes d'entrée :

- Une porte d'entrée a recevant le signal de consigne de couple de la première machine électrique $T_{e1}^{\#}$ ;
- Une porte d'entrée b recevant le signal de consigne de couple de la seconde machine électrique $T_{e2}^{\#}$ ;
- Une porte d'entrée d recevant un vecteur caractérisant l'état électrique des machines électriques $w_{e1}$, $w_{e2}$, $T_{e1}$, $T_{e2}$ ;
- Une porte d'entrée e recevant un signal de mesure de la tension aux bornes de la super capacité $U_{capa}$.

L'unité de détermination 36 comporte trois portes de sortie qui sont :

- Une porte de sortie S1 qui produit un signal d'estimation sous forme d'un vecteur ^Xf transmis à la porte d'entrée e de l'unité de découplage 35 ;
- Une porte de sortie S4 qui produit une valeur d'estimation du couple à la roue ^$T_o$, transmise à la porte d'entrée d de l'unité de régulation 34 ;
- Une porte de sortie S3 qui produit une valeur d'estimation du niveau d'énergie de l'élément tampon d'énergie ^W qui est transmis à la porte d'entrée e de l'unité de régulation.

L'unité de détermination 36 comporte une unité de construction de l'estimation ^Xf qui a pour rôle de construire le signal d'estimation ^Xf qui est représenté par le vecteur suivant qui comporte neuf composantes :

$$\hat{X}_f = \begin{bmatrix} \hat{W} & \hat{\omega}_{e1} & \hat{\omega}_{e2} & \hat{T}_{lice} & \hat{T}_{e1} & \hat{T}_{e2} & \hat{T}_{dwh} & \hat{\omega}_{ice}^{\#} & \hat{P}_{dW} \end{bmatrix} \tag{16}$$

L'estimation de ces signaux est calculée par un observateur linéaire construit à partir du modèle de conception choisi, par mise en oeuvre des techniques connues d'Automatique des Systèmes linéaires. On pourra se reporter aux ouvrages concernant la reconstructions d'état de tels systèmes et particulièrement à l'ouvrage de Philippe de Larminat, « Automatique - Commande des systèmes linéaires », 2° éditions, Hermès, Science Publication 2000.

Les gains de cet observateur constituent des paramètres de réglage de l'unité de détermination.

L'unité de régulation 34 comporte quatre portes d'entrée :

- Une porte d'entrée a recevant un signal de consigne de la tension aux bornes du tampon en énergie 10 ;
- Une porte d'entrée c recevant un signal de consigne de couple à la roue $T_o^*$ ;
- Une porte d'entrée e recevant un signal d'estimation du niveau d'énergie de l'élément tampon d'énergie ^W ;
- Une porte d'entrée d recevant un signal d'estimation du couple à la roue ^$T_o$.

L'unité de régulation 34 comporte deux portes de sortie qui sont respectivement :

- Une porte de sortie S1 de signal de commande intermédiaire v1 ;
- Une porte de sortie S3 de signal de commande intermédiaire v3.

L'unité de régulation 34 comporte deux unités de calcul respectivement du premier signal de commande intermédiaire v1 et du second signal de commande intermédiaire v2.

A partir des deux consignes :

- de niveau d'énergie de l'élément tampon W* ;
- de couple aux roues To*,

l'unité de régulation 34 construit deux signaux de commande intermédiaires (v1, v3) correspondant respectivement à chaque consigne, à partir des informations fournies par l'unité de détermination :

- le signal v1 est calculé par un circuit incorporant un régulateur de type proportionnel à partir de la consigne de charge de l'élément tampon d'énergie comme la tension aux bornes d'un condensateur 10 ;
- le signal v3 est calculé par un circuit incorporant un régulateur de type proportionnel à partir de la consigne de couple aux roues et de l'estimée du couple aux roues.

L'unité de découplage 35 comporte trois portes d'entrée :

- une porte d'entrée a recevant le signal de commande intermédiaire v1 issu de la sortie S1 de l'unité de régulation 34 ;
- une porte d'entrée c recevant le signal de commande intermédiaire v3 issu de la sortie S3 de l'unité de régulation 34 ;

- une porte d'entrée e recevant un signal d'estimation d'un vecteur de contrôle $X_f$.

L'unité de découplage 35 comporte deux portes de sortie qui sont respectivement :

- une porte de sortie S1 de consigne de couple de la première machine électrique $T_{e1}\#$ ;
- une porte de sortie S2 de consigne de couple de la seconde machine électrique $T_{e2}\#$.

Bien entendu, le dispositif qui exécute les fonctions décrites ci-dessus peut être réalisé sur la base d'un processeur de traitement de signal coopérant avec une mémoire de programmes et une mémoire de données ainsi qu'il est connu dans l'état de la technique.

À la figure 9, on a représenté un mode particulier de réalisation de l'unité de découplage 35.

Les deux signaux de régulation v1, v3 sont transmis à un rassembleur vectoriel 140 dont la sortie transmet en séquence les deux signaux à une première borne d'entrée d'un circuit 141 qui réalise l'inversion du modèle de conception par dérivations successives des sorties. On se reportera notamment à l'ouvrage de A. Isidori, « Non Linear Control SYSTEMS » Springer-Verlag 1989.

Le circuit 141 d'inversion du modèle comporte aussi une seconde borne d'entrée connectée à l'entrée e(35) qui reçoit le vecteur d'estimation ^Xf. De ce fait, l'inversion travaille à la fois sur les composantes de régulation V1, V3 et sur les composants du vecteur d'estimation ^Xf.

Les deux signaux de sortie qui correspondent à l'inversion du modèle sont désignés respectivement par U1, U2 sont fournies à l'entrée d'un circuit d'intégration 143 - 147, pour obtenir les deux signaux de commande ($T_{e1}\#$, $T_{e2}\#$) à destination des circuits de contrôle des machines électriques du variateur.

Dans ce mode particulier de réalisation, le circuit d'intégration comporte un gain 143 réglé avec une constante de temps Ts. Le signal de sortie du gain 143 qui a traité également les composantes U1 et U2, est transmis à une borne d'entrée d'un additionneur 144. La borne de sortie de l'additionneur 144 est connectée à une première borne d'entrée d'un circuit de saturation 146. Le vecteur d'estimation ^Xf est aussi fourni à une borne d'entrée d'un bloc de sélection des composantes 2 et 3, référencé 145 dont la borne de sortie est connectée directement à une seconde borne d'entrée du circuit de saturation 146. Il ressort de ce schéma que le circuit de saturation 146 travaille d'une part à partir de la valeur des composantes d'inversion U1 et U2, et d'autre part à partir des composantes d'estimation des vitesses de rotation des deux machines électriques ^$w_{e1}$ et ^$w_{e2}$.

En mode rampage en vitesse, le dispositif de commande 2 retourne des signaux de contrôle pour les actionneurs du groupe motopropulseur 1, à savoir :

- un signal de contrôle émis par une ligne 25 pour mettre en service un contrôleur de ralenti 26 lorsque le dispositif de commande 2 place le véhicule dans le mode d'entraînement spécifique dit de rampage en vitesse et qui est lui-même connecté au contrôleur 3 du moteur thermique 4 ;
- un signal de contrôle émis par des lignes 8 et 9 à destination des contrôleurs du variateur électrique 21 qui permet d'atteindre simultanément l'objectif de régulation sur la vitesse du véhicule.

Dans un mode préféré de réalisation, le signal de contrôle émis par des lignes 8 et 9 est une paire de signaux de commande de couple $T_{e1}\#$ et $T_{e2}\#$ respectivement transmis à des entrées convenables des contrôleurs 19 et 20 des machines électriques $M_{e1}$ 11 et $M_{e2}$ 12.

Le dispositif de commande 2 de l'invention coopère avec un moyen permettant de modéliser le couple moteur produit par la combustion en mode de ralenti sous la forme d'une fonction $T_{tice}$ et une partie de gestion du vilebrequin permettant de modéliser la transformation de l'énergie de combustion en énergie mécanique de rotation. La fonction $T_{tice}$ dont l'expression dépend du véhicule modélisé, et qui produit, à chaque instant défini par le séquenceur du dispositif de l'invention, des signaux ou valeurs numérique représentatifs d'un couple moteur thermique $T_{ice}$ et d'une vitesse de rotation ou régime du moteur thermique $w_{ice}$.

Après une opération de début de commande lors d'une étape S1 au cours de laquelle le dispositif de commande de l'invention est configuré puis initialisé, et ultérieurement uniquement initialisé sauf lors d'opérations de maintenance, le contrôle passe à une étape S2 au cours de laquelle les commandes ($T_{e1}\#$, $T_{e2}\#$) des deux actionneurs sont calculées sur la base d'un vecteur de mesure Z qui sera décrit ci-après. A cet effet, le procédé de l'invention a été représenté par une fonction $f_{rv}()$ et par une fonction $f_{ral}()$ prédéterminées. Les deux fonctions sont déterminées de manière analytique ou algorithmique sur la base des informations de la description en fonction des objectifs de la commande qui sont de calculer la commande des deux actionneurs disponibles sur les machines électriques et de réaliser le point de fonctionnement requis par les couches supérieures de supervision particulièrement dans le mode d'entraînement « rampage en vitesse » selon la relation ($T_{e1}\#$, $T_{e2}\#$) = $f_{rv}(Z)$, tandis que le contrôleur de ralenti applique un contrôle représenté par la relation $T_{ice}$ = $f_{ral}()$, fonction dans laquelle les arguments sont connus de l'homme de métier et arrangés de manière à assurer la gestion du régime de ralenti.

Une fois le couple de valeurs calculé lors de l'étape S2, ces valeurs sont passées aux trois contrôleurs du groupe motopropulseur à savoir une valeur de contrôle de régime de ralenti pour le contrôleur 26 du moteur thermique, $T_{e1}$ pour le contrôleur de la première machine électrique et $T_{e2}$ pour le contrôleur de la seconde machine électrique. Puis, le contrôle passe à une étape S3 de test de fin de mode d'entraînement spécifique. En effet, le procédé de l'invention peut être arrêté puis un autre mode d'entraînement sélectionné. Si le test S3 est négatif, le contrôle passe à une étape S4 de mesure des valeurs instantanées des variables passées ensuite en arguments à la fonction $f_{rv}()$ lors de son évaluation lors de l'étape S2 précitée. Les diverses mesures sont collationnées dans un vecteur Z qui, dans un mode préféré de réalisation de l'invention, comporte :

- le niveau d'énergie stockée dans l'élément tampon d'énergie du variateur de la transmission infiniment variable, mesuré préférentiellement par la tension à ses bornes ;
- pour chacune des deux machines électriques du variateur le couple $T_{e1}$ ou $T_{e2}$ et la vitesse de rotation $w_{e1}$ ou $w_{e2}$.

Si le test S3 est négatif, le contrôle passe à une étape de fin au cours de laquelle le dispositif de commande de l'invention est désactivé.

Dans un mode particulier de réalisation, le mode d'entraînement spécifique commandé dans le procédé de l'invention permet d'annuler la vitesse du véhicule en dissipant l'énergie fournie par le moteur thermique.

Dans un mode particulier de réalisation, le procédé de l'invention comporte les étapes suivantes :

- détermination du niveau de charge du variateur et de la vitesse du véhicule,
- obtention de valeurs intermédiaires par régulation du niveau de charge et de la vitesse du véhicule déterminés, en fonction de valeurs de consigne, et
- découplage des valeurs intermédiaires en signaux de commande du variateur électrique.

Dans un mode particulier de réalisation, le procédé de commande de l'invention consiste à effectuer le découplage des signaux intermédiaires en exploitant des valeurs déterminées de :

- régimes des machines électriques ;
- couple appliqué par le vilebrequin du moteur thermique ;
- couples électromagnétiques des machines électriques ;
- niveau de charge du variateur électrique ;
- facteurs de correction des échanges de puissance électriques dans le variateur 21 ;
- facteurs de correction des couples appliqués sur le vilebrequin et sur les roues.

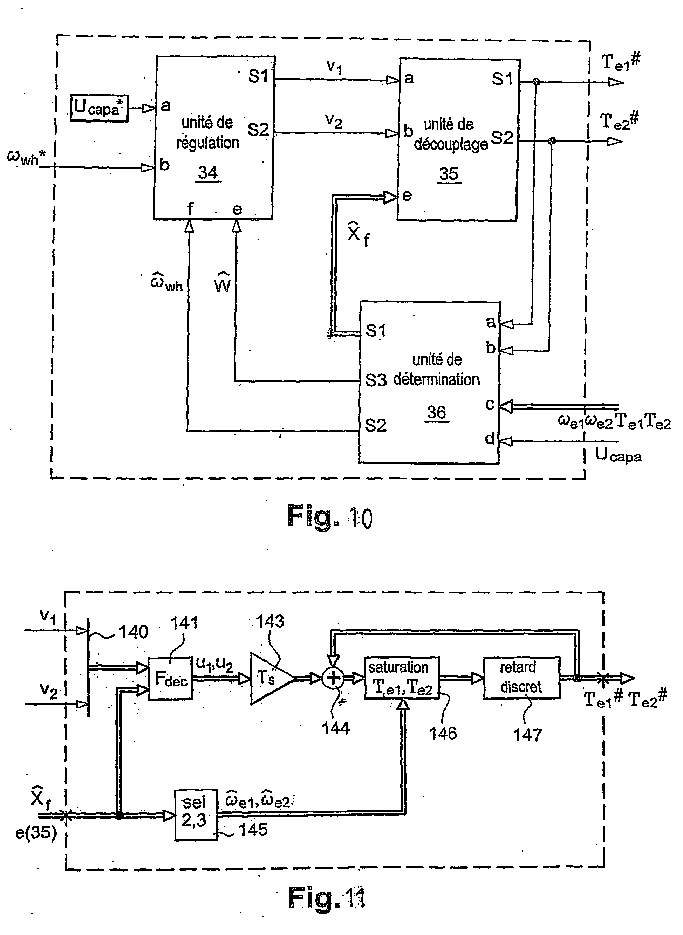

Lors d'une étape S8, le procédé de l'invention consiste à effectuer une estimation de la vitesse de rotation à la roue $\hat{w}_{wh}$, du niveau d'énergie $\hat{W}$, du couple à la roue $\hat{T}o$ et d'un vecteur $\hat{X}f$ rassemblant les grandeurs de simulation de la chaîne électromécanique représentant le variateur électrique de la transmission infiniment variable du groupe motopropulseur donné. Le vecteur $\hat{X}f$ sera décrit et défini à l'aide de la figure 10.

Une fois l'étape S8 de détermination effectuée, une étape de régulation S9 est effectuée sur la base des données estimées à l'étape S8 et sur la donnée de deux valeurs de consigne qui correspondent à une demande de point de fonctionnement du groupe motopropulseur. Dans un mode particulier de réalisation, adapté notamment à l'architecture à trois couches définie dans le procédé décrit dans la précédente publication FR 2 834 249 du présent demandeur, ces valeurs de consigne sont respectivement la consigne $w_{ice}^*$ de régime moteur et la consigne $To^*$ de couple à la roue. L'étape de régulation S9 produit un vecteur $V^*$ de valeurs intermédiaires en appliquant un algorithme de régulation qui sera défini ci-après.

Une fois l'étape S9 de régulation effectuée, une étape de découplage S10 est effectuée sur la base des variables intermédiaires produites à l'étape S9. L'étape de découplage S10 produit le couple de valeurs de consigne à destination des contrôleurs du groupe motopropulseur sous la dépendance du dispositif de commande 2 de l'invention, à savoir une consigne de couple pour chacune des machines électriques respectivement $T_{e1}\#$ et $T_{e2}\#$ ; de sorte que le point de fonctionnement régulé du groupe motopropulseur ($w_{ice}$, $w_{wh}$) soit atteint. L'algorithme de découplage sera défini ci-après.

A la Figure 10, on a représenté un mode particulier de réalisation des principales unités du dispositif de commande 2 de l'invention. Dans un mode particulier de réalisation, ces unités constituent la part essentielle du contrôleur de troisième niveau COS qui est décrit dans la précédente publication FR2834249 et qui reçoit un point optimal de fonctionnement du groupe motopropulseur sous la forme d'un doublet de signaux de consigne ($w_{ice}^*$, $To^*$). Le point optimal de fonctionnement est déterminé par un contrôleur de point de fonctionnement optimal, quelque soit le type de groupe motopropulseur en fonction de l'interprétation de la volonté du conducteur, prenant en compte des paramètres comme le degré d'enfoncement de la pédale d'accélérateur, et/ou d'un régulateur de conduite et de la détection des paramètres de l'environnement du véhicule, comme sa vitesse de roulage ou la pente dans laquelle il est situé, interprétation et détection confiées à un contrôleur de la commande du véhicule.

En mode « de rampage en vitesse » le moteur thermique n'est pas commandé par les deux couches supérieures, mais travaille en régime de ralenti sans être découplé de la transmission infiniment variable.

Le superviseur au contrôleur IVC fournit à l'entrée du contrôleur de troisième couche COS une consigne de vitesse de rotation à la roue. On dispose d'une consigne de tension du condensateur qui sert le plus souvent d'élément tampon d'énergie pour le variateur électrique. A partir de ces deux consignes et des mesures disponibles décrivant l'environnement du véhicule, comme la vitesse du véhicule ou la pente dans laquelle il est engagé, le contrôleur COS génère les consignes de couple pour les deux principaux actionneurs du GMP, à savoir les deux machines électriques (Me1 et Me2) dans le mode « rampage en vitesse » concerné par l'invention.

Dans une première couche, un module exécute une interprétation de la volonté du conducteur en fonction de la détection de l'environnement du véhicule, notamment de la vitesse de déplacement du véhicule. Particulièrement, on détecte que le degré d'enfoncement de la pédale d'accélérateur et celui de la pédale de frein sont nuls pour déterminer qu'on est en mode « rampage en vitesse ».

A la Figure 8, on a représenté un mode particulier de réalisation des principales unités du dispositif de commande 2 de l'invention qui sont :

- une unité de détermination 36 des variables décrivant l'état du système,
- une unité de régulation 34, et
- une unité de découplage 35.

Le paramétrage de ces unités repose sur un modèle de comportement du véhicule, de conception suffisamment simple pour être directement exploitable, et suffisamment complexe pour traduire l'ensemble des phénomènes physiques pertinents. Son choix a été conduit sur la base de nombreuses déterminations théoriques d'une part et d'essais pratiques permettant d'atteindre les objectifs précités.

L'unité de détermination 36 comporte quatre portes d'entrée :

- Une porte d'entrée a recevant le signal de consigne de couple de la première machine électrique $T_{e1}^{\#}$ ;
- Une porte d'entrée b recevant le signal de consigne de couple de la second machine électrique $T_{e2}^{\#}$ ;
- Une porte d'entrée c recevant un vecteur caractérisant l'état électrique des machines électriques $w_{e1}$, $w_{e2}$, $T_{e1}$, $T_{e2}$ ;
- Une porte d'entrée d recevant un signal de mesure de la tension aux bornes de la super capacité $U_{capa}$.

L'unité de détermination 36 comporte trois portes de sortie qui sont :

- Une porte de sortie S1 qui produit un signal d'estimation sous forme d'un vecteur ^Xf transmis à la porte d'entrée e de l'unité de découplage 35 ;
- Une porte de sortie S2 qui produit une valeur d'estimation du régime à la roue ^$w_{wh}$, transmis à la porte d'entrée f de l'unité de régulation 34 ;
- Une porte de sortie S3 qui produit une valeur d'estimation du niveau d'énergie de l'élément tampon d'énergie ^W qui est transmis à la porte d'entrée e de l'unité de régulation.

L'unité de construction 36 de l'estimation ^Xf a pour rôle de construire le signal d'estimation ^Xf qui est représenté par le vecteur suivant qui comporte neuf composantes vectorielles :

$$\hat{X}_f = \begin{bmatrix} \hat{W} & \hat{\omega}_{e1} & \hat{\omega}_{e2} & \hat{T}_{\text{Iice}} & \hat{T}_{e1} & \hat{T}_{e2} & \hat{T}_{dwh} & \dot{\hat{\omega}}_{ice}^{\#} & \hat{P}_{dW} \end{bmatrix} \tag{16}$$

L'estimation de ces signaux est calculée par un observateur linéaire construit à partir du modèle de conception choisi, par mise en oeuvre des techniques connues d'Automatique des Systèmes linéaires. On pourra se reporter aux ouvrages concernant la reconstructions d'état de tels systèmes et particulièrement à l'ouvrage de Philippe de Larminat, « Automatique - Commande des systèmes linéaires », 2° édition, Hermès, Science Publication 2000.

Les gains de cet observateur constituent des paramètres de réglage de l'unité de détermination.

L'unité de régulation 34 comporte quatre portes d'entrée :

- Une porte d'entrée a recevant un signal de consigne de la tension aux bornes du tampon en énergie 10 ;
- Une porte d'entrée b recevant un signal de représentatif de la valeur optimale de la vitesse de rotation aux roues $w_{wh}^{*}$ ;
- Une porte d'entrée e recevant un signal d'estimation du niveau d'énergie de l'élément tampon d'énergie ^W ;
- Une porte d'entrée f recevant un signal d'estimation de la vitesse de rotation aux roues ^$w_{wh}$.

L'unité de régulation 34 comporte deux portes de sortie qui sont respectivement :

- Une porte de sortie S1 de signal de commande intermédiaire v1 ;
- Une porte de sortie S2 de signal de commande intermédiaire v2.

L'unité de régulation 34 comporte deux unités de calcul respectivement du premier signal de commande intermédiaire v1 et du second signal de commande intermédiaire v2.

A partir des deux consignes :

- de niveau d'énergie de l'élément tampon W* ;
- de vitesse de rotation à la roue $w_{wh}{}^{*}$,
  l'unité de régulation 34 construit deux signaux de commande intermédiaires (v1, v2) correspondant respectivement à chaque consigne, à partir des informations fournies par l'unité de détermination :

  - le signal v1 est calculé par un circuit incorporant un régulateur de type proportionnel à partir de la consigne de charge de l'élément tampon d'énergie comme la tension aux bornes d'un condensateur 10 ;
  - le signal v2 est calculé par un circuit incorporant un régulateur de type proportionnel à partir de la consigne de régime des roues et de l'estimée du régime des roues.

L'unité de découplage 35 comporte trois portes d'entrée :

- Une porte d'entrée a recevant le signal de commande intermédiaire v1 issu de la sortie S1 de l'unité de régulation 34 ;
- Une porte d'entrée b recevant le signal de commande intermédiaire v2 issu de la sortie S2 de l'unité de régulation 34 ;
- une porte d'entrée e recevant un signal d'estimation d'un vecteur de contrôle $X_f$.

L'unité de découplage 35 comporte deux portes de sortie qui sont respectivement :

- Une porte de sortie S1 de consigne de couple de la première machine électrique $T_{e1}{}^{\#}$ ;
- Une porte de sortie S2 de consigne de couple de la seconde machine électrique $T_{e2}{}^{\#}$.

Bien entendu, le dispositif qui exécute les fonctions décrites ci-dessus peut être réalisé sur la base d'un processeur de traitement de signal coopérant avec une mémoire de programmes et une mémoire de données ainsi qu'il est connu dans l'état de la technique.

À la figure 11, on a représenté un mode particulier de réalisation de l'unité de découplage 35.

Les deux signaux de régulation v1, v2 sont transmis à un rassembleur vectoriel 140 dont la sortie transmet en séquence les deux signaux à une première borne d'entrée d'un circuit 141 qui réalise l'inversion du modèle de conception par dérivations successives des sorties. On se reportera notamment à l'ouvrage de A. Isidori , « Non Linear Control SYSTEMS » Springer-Verlag 1989.

Le circuit 141 d'inversion du modèle comporte aussi une seconde borne d'entrée connectée à l'entrée e(35) qui reçoit le vecteur d'estimation ^Xf. De ce fait, l'inversion travaille à la fois sur les composantes de régulation V1, V2 et sur les composants du vecteur d'estimation ^Xf.

Les deux signaux de sortie qui correspondent à l'inversion du modèle sont désignés respectivement par U1, U2 sont fournies à l'entrée d'un circuit d'intégration 143 - 147, pour obtenir les deux signaux de commande ($T_{e1}{}^{\#}$, $T_{e2}{}^{\#}$) à destination des circuits de contrôle des machines électriques du variateur.

Dans ce mode particulier de réalisation, le circuit d'intégration comporte un gain 143 réglé avec une constante de temps Ts. Le signal de sortie du gain143 qui a traité également les composantes U1 et U2, est transmis à une borne d'entrée d'un additionneur 144. La borne de sortie de l'additionneur 144 est connectée à une première borne d'entrée d'un circuit de saturation 146. Le vecteur d'estimation ^Xf est aussi fourni à une borne d'entrée d'un bloc de sélection des composantes 2 et 3, référencé 145 dont la borne de sortie est connectée directement à une seconde borne d'entrée du circuit de saturation 146. Il ressort de ce schéma que le circuit de saturation 146 travaille d'une part à partir de la valeur des composantes d'inversion U1 et U2, et d'autre part à partir des composantes d'estimation des vitesse de rotation des deux machines électriques $^{\wedge}w_{e1}$ et $^{\wedge}w_{e2}$.

## Revendications

1. Procédé de commande d'un groupe motopropulseur de véhicule comportant un moteur thermique couplé directement aux roues du véhicule et une transmission infiniment variable à variateur électrique incluant deux machines électriques, selon lequel le véhicule peut être, selon une pluralité de modes d'entraînement spécifiques du véhicule, entraîné par le groupe motopropulseur, freiné par celui-ci, découplé de celui-ci ou maintenu à l'arrêt, **caractérisé en ce que** le procédé de commande est du genre dans lequel il est exécuté :

- une interprétation de la volonté du conducteur ; puis
- une détermination d'un point optimal de fonctionnement du groupe motopropulseur ; puis
- une détermination de signaux de commande des actionneurs dudit groupe motopropulseur ;

l'étape de détermination de signaux de commande des actionneurs dudit groupe motopropulseur consistant, à déterminer un mode d'entraînement spécifique sélectionné dans ladite pluralité de modes d'entraînement spécifiques du véhicule par le groupe motopropulseur, à contrôler le couple à la roue (To) et le régime du moteur thermique ($w_{ice}$) en exploitant uniquement une mesure du niveau de charge de l'élément tampon d'énergie électrique ($U_{capa}$) et des mesures de régime($T_{e1}$, $T_{e2}$) et de couple($w_{e1}$, $w_{e2}$) fournies par les machines ($M_{e1}$ 11, $M_{e2}$ 12).

2. Procédé selon la revendication 1, **caractérisé en ce qu'**il comporte les étapes suivantes :

- détermination (S8) du niveau de charge (Ucapa) du variateur (21), du couple à la roue (To) et du régime du moteur thermique ($w_{ice}$),
- obtention (S9) de valeurs intermédiaires (V) par régulation du niveau de charge, du couple à la roue et du régime moteur thermique, déterminées en fonction de valeurs de consigne, et
- découplage (S10) des valeurs intermédiaires (V) en signaux de commande ($T_{e1}$#, $T_{e2}$#) du variateur (21) et en signal de commande ($T_{ice}$#) du moteur thermique (14).

3. Procédé de commande selon la revendication 2, **caractérisé en ce que** l'étape de découplage des signaux intermédiaires exploite des valeurs déterminées de :

- régimes ($w_{e1}$, $w_{e2}$) des machines électriques ($M_{e1}$, 11 ; $M_{e2}$, 12),
- régime ($w_{ice}$) du moteur thermique (4),
- couples électromagnétiques ($T_{e1}$, $T_{e2}$) des machines électriques ($M_{e1}$, 11 ; $M_{e2}$, 12),
- niveau de charge (Ucapa) du variateur électrique,
- facteurs de correction des échanges de puissance électrique dans le variateur,
- facteurs de correction des couples appliqués sur le vilebrequin et sur les roues,

4. Procédé selon l'une quelconque des revendications 1 à 3, **caractérisé en ce qu'**il consiste à sélectionner un mode de tirage dans ladite pluralité de modes d'entraînement spécifiques du véhicule par le groupe motopropulseur, dans lequel on assure la régulation de ralenti du moteur thermique tout en contrôlant le couple (To) fourni par le groupe motopropulseur.

5. Procédé de commande selon l'une des revendications 1 à 3, **caractérisé en ce qu'**il consiste à sélectionner un mode de freinage dans ladite pluralité de modes d'entraînement spécifiques du véhicule par le groupe motopropulseur, dans lequel on contrôle le régime du moteur thermique, le moteur thermique étant en coupure d'injection, en exploitant uniquement une mesure du niveau de charge du variateur et des mesures de régime des machines électriques et de couple fourni par celles- ci.

6. Procédé de commande selon les revendications 1 à 3, **caractérisé en ce qu'**il consiste à sélectionner un mode de ralenti dans ladite pluralité de modes d'entraînement spécifiques du véhicule par le groupe motopropulseur selon lequel on contrôle le couple à la roue en maintenant le moteur thermique au ralenti en exploitant uniquement une mesure du niveau de charge du variateur (21) et des mesures de régime des machines électriques ($M_{e1}$, 11 ; $M_{e2}$, 12) et de couple fourni par celles-ci.

7. Procédé selon la revendication 6, **caractérisé en ce que**, dans le mode de ralenti, il consiste à annuler le couple fourni par le groupe motopropulseur en dissipant l'énergie fournie par le moteur thermique.

8. Procédé de commande selon l'une des revendications 1 à 3, **caractérisé en ce qu'**il consiste à sélectionner un mode d'entraînement spécifique du véhicule par le groupe motopropulseur selon lequel on contrôle la vitesse du véhicule en maintenant le moteur thermique au ralenti en exploitant uniquement une mesure du niveau de charge du variateur (21) et des mesures de régime des machines électriques ($M_{e1}$, 11 ; $M_{e2}$, 12) et de couple fourni par celles-ci.

**9.** Procédé selon la revendication 8, **caractérisé en ce que** le mode d'entraînement spécifique permet d'annuler la vitesse du véhicule en dissipant l'énergie fournie au moteur thermique.

**10.** Dispositif de commande d'un groupe motopropulseur à transmission infiniment variable pour mettre en oeuvre le procédé selon l'une des revendications précédentes, et du genre basé sur une architecture de supervision à trois couches comportant :

- un premier contrôleur pour interpréter la volonté du conducteur ;
- un second contrôleur pour déterminer un point optimal de fonctionnement du groupe motopropulseur ; et
un troisième contrôleur pour déterminer les signaux de commande des actionneurs du groupe motopropulseur ;

**caractérisé en ce que** le troisième contrôleur (25) comporte :

- une unité de régulation (34) pour réguler le couple à la roue (To) et le régime moteur thermique (wice) ;
- une unité de découplage (35) pour en déduire les couples de consignes du moteur thermique est des machines électriques ; et
- une unité de détermination (36) pour déterminer le niveau de charge de l'élément de stockage d'énergie électrique de la transmission infiniment variable, de couple à la roue er de régime moteur thermique ;

et **en ce que** l'unité de découplage (35) comporte :

- un rassembleur vectoriel (140) rassemblant des variables intermédiaire(v1, v3) issues de la régulation (34) du niveau de charge et du couple aux roues déterminés exécutée par l'unité de régulation (34) ;
- un module (141) de découplage non linéaire recevant la sortie du rassembleur (140) et l'ensemble des variables déterminées (^Xf) exécutée par l'unité de détermination (36) ;
- un module (143) appliquant aux deux premières sorties du module (141) un gain égal à la période d'échantillonnage (Ts) du système ;
- un opérateur d'addition (144) ajoutant au signal de sortie du module (143) le premier signal de sortie de ladite unité ;
- un circuit (146) appliquant à la sortie de l'opérateur (144) une saturation en fonction du couple électromagnétique maximal qui dépend des régimes déterminés à chaque machine électrique,
- un circuit (147) appliquant un retard au signal de sortie du circuit de saturation (146) de façon à produire des signaux de commande de couple ($T_{e1}$#, $T_{e2}$#) des deux machines électriques.

**11.** Dispositif de commande selon la revendication 10, **caractérisé en ce qu'**il comporte

- un circuit (150) appliquant un retard au signal de sortie du circuit de saturation (148) de façon à produire un signal de commande ($T_{ice}$#) du couple du moteur thermique, et
- un circuit (150) appliquant un retard au signal de sortie du circuit de saturation (148) de façon à produire un signal de commande ($T_{ice}$#) du couple du moteur thermique.

**Claims**

**1.** Method for controlling a vehicle powertrain comprising a combustion engine coupled directly to the wheels of the vehicle and a continuously variable transmission with electric variator including two electrical machines, whereby the vehicle may, according to a plurality of vehicle-specific drive modes, be driven by the powertrain, braked thereby, decoupled therefrom, or kept stationary, **characterized in that** the control method is of the kind in which the following are carried out:

- the wishes of the driver are interpreted;
- an optimal powertrain operating point is determined; then
- control signals for controlling the actuators of the said powertrain are determined;

the step of determining the signals for controlling the actuators of the said powertrain consisting in determining a specific drive mode selected from the said plurality of specific drive modes whereby the powertrain drives the vehicle, in controlling the torque at the wheel (To) and the combustion engine speed ($W_{ice}$) using only a measurement of the level of charge of the electrical energy buffer element ($U_{capa}$) and measurements of speed ($T_{e1}$, $T_{e2}$) and of

**EP 1 626 878 B1**

torque ($W_{e1}$, $W_{e2}$) applied by the machines ($M_{e1}$ 11, $M_{e2}$ 12).

2. Method according to Claim 1, **characterized in that** it involves the following steps:

  - determining (S8) the level of charge ($U_{capa}$) of the variator (21), the torque at the wheel (To) and the combustion engine speed ($W_{ice}$),
  - obtaining (S9) intermediate values (V) by regulating the level of charge, the torque at the wheel and the combustion engine speed, these being determined as a function of setpoint values, and
  - decoupling (S10) the intermediate values (V) into control signals ($T_{e1}\#$, $T_{e2}\#$) for the variator (21) and into a control signal ($T_{ice}\#$) for the combustion engine (14).

3. Control method according to Claim 2, **characterized in that** the step of decoupling the intermediate signals uses determined values of:

  - speeds ($W_{e1}$, $W_{e2}$) of the electrical machines ($M_{e1}$, 11; $M_{e2}$, 12),
  - speed ($W_{ice}$) of the combustion engine (4),
  - electromagnetic torques ($T_{e1}$, $T_{e2}$) of the electrical machines ($M_{e1}$, 11; $M_{e2}$, 12),
  - the level of charge ($U_{capa}$) of the electrical variator,
  - correction factors for the exchanges of electrical power within the variator,
  - correction factors for the torques applied to the crankshaft and to the wheels.

4. Method according to any one of Claims 1 to 3, **characterized in that** it consists in selecting a "drive" mode from the said plurality of specific drive modes whereby the vehicle is driven by the powertrain, in which mode the idle speed of the combustion engine is regulated while at the same time controlling the torque (To) supplied by the powertrain.

5. Control method according to one of Claims 1 to 3, **characterized in that** it consists in selecting a "braking" mode from the said plurality of specific drive modes whereby the vehicle is driven by the powertrain, in which mode the combustion engine speed is controlled, the combustion engine having injection cut off, using only a measurement of the level of charge of the variator and measurements of speed of the electrical machines and of torque supplied thereby.

6. Control method according to Claims 1 to 3, **characterized in that** it consists in selecting an "idle" mode from the said plurality of specific drive modes whereby the vehicle is driven by the powertrain, in which mode the torque at the wheel is controlled keeping the combustion engine at idle speed and using only a measurement of the level of charge of the variator (21) and measurements of speed of the electrical machines ($M_{e1}$, 11; $M_{e2}$, 12) and of torque supplied thereby.

7. Method according to Claim 6, **characterized in that**, in "idle" mode, it consists in cancelling the torque supplied by the powertrain by dissipating the energy supplied by the combustion engine.

8. Control method according to one of Claims 1 to 3, **characterized in that** it consists in selecting a specific drive mode whereby the vehicle is driven by the powertrain, in which mode the speed of the vehicle is controlled keeping the combustion engine at idle speed and using only a measurement of the level of charge of the variator (21) and measurements of speed of the electrical machines ($M_{e1}$, 11; $M_{e2}$, 12) and of torque supplied thereby.

9. Method according to Claim 8, **characterized in that** the specific drive mode makes it possible to cancel the speed of the vehicle by dissipating the energy supplied to the combustion engine.

10. Device for controlling a powertrain with continuously variable transmission for implementing the method according to one of the preceding claims, and of the kind based on a three-layer supervision architecture comprising:

  - a first controller for interpreting the wishes of the driver;
  - a second controller for determining optimum powertrain operating point; and
  - a third controller for determining the control signals for controlling the powertrain actuators; **characterized in that** the third controller (25) comprises:
  - a regulating unit (34) for regulating the torque at the wheel (To) and the combustion engine speed ($W_{ice}$) ;
  - a decoupling unit (35) to deduce from this the combustion engine and electrical machine setpoint torques; and

- a determining unit (36) for determining the level of charge of the electrical energy storage element of the continuously variable transmission, the torque at the wheel and the combustion engine speed;

and **in that** the decoupling unit (35) comprises:

- a vector combiner (140) combining intermediate variables (v1, v3) originating from the regulating (34) of the determined level of charge and determined torque at the wheels, which regulating is performed by the regulating unit (34);
- a non-linear decoupling module (141) that receives the output from the combiner (140) and the set of determined variables (^Xf) executed by the determining unit (36);
- a module (143) that applies to the first two outputs from the module (141) a gain equal to the sampling period (Ts) of the system;
- an addition operator (144) that adds to the output signal of the module (143) the first output signal of the said unit;
- a circuit (146) that applies to the output of the operator (144) a saturation as a function of the maximum electromagnetic torque that is dependent on the determined speeds for each electrical machine,
- a circuit (147) that applies a delay to the output signal from the saturation circuit (146) so as to produce torque control signals ($T_{e1}$#, $T_{e2}$#) for the two electrical machines.

**11.** Control device according to Claim 10, **characterized in that** it comprises:

- a circuit (150) that applies a delay to the output signal from the saturation circuit (148) so as to produce a combustion engine torque control signal ($T_{ice}$#), and
- a circuit (150) that applies a delay to the output signal from the saturation circuit (148) so as to produce a combustion engine torque control signal ($T_{ice}$#).

**Patentansprüche**

**1.** Verfahren zur Steuerung einer Antriebseinheit eines Fahrzeugs, die einen Verbrennungsmotor, der direkt mit den Rädern des Fahrzeugs gekoppelt ist, und ein stufenloses Getriebe mit elektrischem Versteller aufweist, das zwei elektrische Maschinen umfasst, gemäß dem das Fahrzeug gemäß mehreren spezifischen Antriebsmodi des Fahrzeugs von der Antriebseinheit angetrieben, von dieser gebremst, von dieser entkoppelt oder im Stillstand gehalten werden kann, **dadurch gekennzeichnet, dass** das Steuerverfahren von der Art ist, in der ausgeführt wird:

- eine Interpretation des Willens des Fahrers; dann
- eine Bestimmung eines optimalen Betriebspunkts der Antriebseinheit; dann
- eine Bestimmung von Steuersignalen der Stellglieder der Antriebseinheit;

wobei der Schritt der Bestimmung von Steuersignalen der Stellglieder der Antriebseinheit darin besteht, einen spezifischen Antriebsmodus zu bestimmen, der aus den mehreren spezifischen Antriebsmodi des Fahrzeugs von der Antriebseinheit ausgewählt wird, das Radmoment (To) und die Drehzahl des Verbrennungsmotors ($w_{ice}$) zu überwachen, indem nur eine Messung des Lastpegels des elektrischen Energiepufferelements ($U_{capa}$) und Drehzahlmessungen ($T_{e1}$, $T_{e2}$) und Drehmomentmessungen ($w_{e1}$, $w_{e2}$) ausgewertet werden, die von den Maschinen ($M_{e1}$ 11, $M_{e2}$ 12) geliefert werden.

**2.** Verfahren nach Anspruch 1, **dadurch gekennzeichnet, dass** es die folgenden Schritte aufweist:

- Bestimmung (S8) des Lastpegels ($U_{capa}$) des Verstellers (21), des Radmoments (To) und der Drehzahl des Verbrennungsmotors ($w_{ice}$),
- Erhalt (S9) von Zwischenwerten (V) durch Regelung des Lastpegels, des Radmoments und der Verbrennungsmotor-Drehzahl, die in Abhängigkeit von Sollwerten bestimmt werden, und
- Entkopplung (S10) der Zwischenwerte (V) in Steuersignale ($T_{e1}$#, $T_{e2}$#) des Verstellers (21) und Steuersignal ($T_{ice}$#) des Verbrennungsmotors (14).

**3.** Steuerverfahren nach Anspruch 2, **dadurch gekennzeichnet, dass** der Schritt der Entkopplung der Zwischensignale bestimmte Werte auswertet von:

- Drehzahlen ($w_{e1}$, $w_{e2}$) der elektrischen Maschinen ($M_{e1}$, 11; $M_{e2}$, 12),

- der Drehzahl ($w_{ice}$) des Verbrennungsmotors (4),
- elektromagnetischen Drehmomenten ($T_{e1}$, $T_{e2}$) der elektrischen Maschinen ($M_{e1}$, 11; $M_{e2}$, 12),
- dem Lastpegel ($U_{capa}$) des elektrischen Verstellers,
- Korrekturfaktoren der Austauschvorgänge von elektrischer Leistung im Versteller,
- Korrekturfaktoren der an die Kurbelwelle und an die Räder angewendeten Drehmomente.

4. Verfahren nach einem der Ansprüche 1 bis 3, **dadurch gekennzeichnet, dass** es darin besteht, aus den mehreren spezifischen Antriebsmodi des Fahrzeugs durch die Antriebseinheit einen Zugmodus auszuwählen, bei dem die Leerlaufregelung des Verbrennungsmotors bei gleichzeitiger Überwachung des von der Antriebseinheit gelieferten Drehmoments (To) gewährleistet wird.

5. Steuerverfahren nach einem der Ansprüche 1 bis 3, **dadurch gekennzeichnet, dass** es darin besteht, aus den mehreren spezifischen Antriebsmodi des Fahrzeugs durch die Antriebseinheit einen Bremsmodus auszuwählen, bei dem die Drehzahl des Verbrennungsmotors überwacht wird, wobei der Verbrennungsmotor im Zustand der Einspritzabschaltung ist, indem nur eine Messung des Lastpegels des Verstellers und Messungen der Drehzahl der elektrischen Maschinen und des von diesen gelieferten Drehmoments ausgewertet werden.

6. Steuerverfahren nach den Ansprüchen 1 bis 3, **dadurch gekennzeichnet, dass** es darin besteht, aus den mehreren spezifischen Antriebsmodi des Fahrzeugs durch die Antriebseinheit einen Leerlaufmodus auszuwählen, gemäß dem das Radmoment überwacht wird, indem der Verbrennungsmotor im Leerlauf gehalten wird, indem nur eine Messung des Lastpegels des Verstellers (21) und Messungen der Drehzahl der elektrischen Maschinen ($M_{e1}$, 11; $M_{e2}$, 12) und des von diesen gelieferten Drehmoments ausgewertet werden.

7. Verfahren nach Anspruch 6, **dadurch gekennzeichnet, dass** es im Leerlaufmodus darin besteht, das von der Antriebseinheit gelieferte Drehmoment zu annullieren, indem die vom Verbrennungsmotor gelieferte Energie abgeführt wird.

8. Steuerverfahren nach einem der Ansprüche 1 bis 3, **dadurch gekennzeichnet, dass** es darin besteht, einen spezifischen Antriebsmodus des Fahrzeugs durch die Antriebseinheit auszuwählen, gemäß dem die Geschwindigkeit des Fahrzeugs überwacht wird, indem der Verbrennungsmotor im Leerlauf gehalten wird, indem nur eine Messung des Lastpegels des Verstellers (21) und Messungen der Drehzahl der elektrischen Maschinen ($M_{e1}$, 11; $M_{e2}$, 12) und des von diesen gelieferten Drehmoments ausgewertet werden.

9. Verfahren nach Anspruch 8, **dadurch gekennzeichnet, dass** der spezifische Antriebsmodus es ermöglicht, die Geschwindigkeit des Fahrzeugs zu annullieren, indem die an den Verbrennungsmotor gelieferte Energie abgeführt wird.

10. Vorrichtung zur Steuerung einer Antriebseinheit mit stufenlosem Getriebe, um das Verfahren nach einem der vorhergehenden Ansprüche anzuwenden, und von der Art, die auf einer Überwachungsarchitektur mit drei Schichten basiert, die aufweist:

   - ein erstes Steuergerät, um den Willen des Fahrers zu interpretieren;
   - ein zweites Steuergerät, um einen optimalen Betriebspunkt der Antriebseinheit zu bestimmen; und
   - ein drittes Steuergerät, um die Steuersignale der Stellglieder der Antriebseinheit zu bestimmen;

   **dadurch gekennzeichnet, dass** das dritte Steuergerät (25) aufweist:

   - eine Regeleinheit (34), um das Radmoment (To) und die Verbrennungsmotor-Drehzahl ($w_{ice}$) zu regeln;
   - eine Entkopplungseinheit (35), um daraus die Sollmomente des Verbrennungsmotors und der elektrischen Maschinen abzuleiten; und
   - eine Bestimmungseinheit (36), um den Lastpegel des elektrischen Energiespeicherelements des stufenlosen Getriebes, das Radmoment und die Verbrennungsmotor-Drehzahl zu bestimmen;

   und dass die Entkopplungseinheit (35) aufweist:

   - einen vektoriellen Sammler (140), der Zwischenvariable (v1, v3) sammelt, die von der Regelung (34) des bestimmten Lastpegels und dem bestimmten Radmoment stammen, ausgeführt von der Regelungseinheit (34);
   - einen nicht-linearer Entkopplungsmodul (141), der das Ausgangssignal des Sammlers (140) und die Gesamtheit der bestimmten Variablen (^Xf) empfängt, ausgeführt von der Bestimmungseinheit (36);
- einen Modul (143), der an die zwei ersten Ausgänge des Moduls (141) eine Verstärkung gleich der Tastperiode (Ts) des Systems anlegt;
- einen Additionsoperator (144), der zum Ausgangssignal des Moduls (143) das erste Ausgangssignal der Einheit hinzufügt;
- eine Schaltung (146), die an den Ausgang des Operators (144) eine Sättigung in Abhängigkeit vom maximalen elektromagnetischen Drehmoment anlegt, das von den in jeder elektrischen Maschine bestimmten Drehzahlen abhängt,
- eine Schaltung (147), die eine Verzögerung an das Ausgangssignal der Sättigungsschaltung (146) anlegt, um Drehmoment-Steuersignale ($T_{e1}$#, $T_{e2}$#) der zwei elektrischen Maschinen zu erzeugen.

**11.** Steuervorrichtung nach Anspruch 10, **dadurch gekennzeichnet, dass** sie aufweist

- eine Schaltung (150), die eine Verzögerung an das Ausgangssignal der Sättigungsschaltung (148) anlegt, um ein Steuersignal ($T_{ice}$#) des Drehmoments des Verbrennungsmotors zu erzeugen, und
- eine Schaltung (150), die eine Verzögerung an das Ausgangssignal der Sättigungsschaltung (148) anlegt, um ein Steuersignal ($T_{ice}$#) des Drehmoments des Verbrennungsmotors zu erzeugen.

GMP 1

IVT 5

| CTRL -3- | ICE -4- |

15

-13-

16

6

17    18

ME1 -11-    ME2 -12-

22    23

variateur

21

CTRL -19-    CTRL -20-

RAL -26-

Batt -10-

24

25    7    8    9

D. de commande -2-

Z

**Fig. 1**

S1

Début

S2    $(T_{ice}\#, T_{e1}\#, T_{e2}\#) = f(\vec{Z})$

Mesurer $\vec{Z}$    S4

S3

OUI    Fin de mode d'entrainement    NON

Fin    S5

**Fig. 2**

EP 1 626 878 B1

Fig. 3

Fig. 4

Fig. 5

EP 1 626 878 B1

EP 1 626 878 B1

Fig. 6

Fig. 7

29

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1255175 A

- FR 2834249

**Littérature non-brevet citée dans la description**

- **PHILIPPE DE LARMINAT.** Automatique - Commande des systèmes linéaires. Science Publication, 2000

- **A. ISIDORI.** Non Linear Control Systems. Springer-Verlag, 1989
- **A. ISIDORI.** Non Linear Control SYSTEMS. Springer-Verlag, 1989